# EUROPEAN PATENT APPLICATION

(11) **EP 4 654 700 A1**
(43) Date of publication of application: **26.11.2025**
(21) Application number: 24744210.6
(22) Date of filing: 15.01.2024
(51) Int. Cl.: H04W 72/04

(54) **METHOD AND APPARATUS USED IN COMMUNICATION NODE FOR WIRELESS COMMUNICATION**

(30) Priority: 20.01.2023 CN 202310201206; 01.02.2023 CN 202310096391
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/072317
(87) International publication number: WO 2024/153034

(57) **Abstract**

Disclosed in the present application are a method and apparatus used in a communication node for wireless communication. The method comprises: a communication node receiving a first message, the first message comprising a first identifier, and the first identifier indicating a first node; after the first message is received, sending a first Preamble in a first random access process; in response to the behavior of sending the first Preamble, monitoring, in a first time window, a PDCCH identified by a first RNTI, wherein the first message is an RRC message, and a logical channel used for carrying the first message is a PCCH, the first message comprises a first information block; an air interface resource of the first Preamble depends on the first information block, and the air interface resource comprises at least one of a code domain resource, a time domain resource or a frequency domain resource. According to the solution provided by the present application, competition can be reduced, the transmission delay is shortened, and the signaling overhead is reduced.

## Description

### Technical Field

The present application relates to a transmission method and apparatus in a wireless communication system, and in particular to a transmission method and apparatus for random access and/or wireless resource control.

### Background Art

In order to reduce signaling overhead and shorten delay, NR (New Radio) established the "MT (DL (Downlink))-SDT (Mobile Terminated-Small Data Transmission)" work item in Rel-18 to study an MT-SDT procedure for initial DL data reception and subsequent UL/DL data transmission in an RRC inactive state.

In order to reduce signaling overhead and shorten delay, Rel-18 established the "Further NR mobility enhancements" work item to study an L1 (Layer 1)/L2 (Layer 2) triggered mobility (LTM).

With the continuous evolution of wireless communication technology, reducing signaling overhead and shortening delay have become important performance indicators. For example, in order to reduce signaling overhead and shorten delay, NR (New Radio) established the "MT (DL (Downlink))-SDT (Mobile Terminated-Small Data Transmission)" work item in Rel-18 to study an MT-SDT procedure for initial DL (Downlink) data reception and subsequent UL/DL data transmissions in the RRC (Radio Resource Control) inactive state (RRC_INACTIVE). In order to reduce signaling overhead and shorten delay, Rel-18 established the "Further NR mobility enhancements" work item to study the L1 (Layer 1)/L2 (Layer 2) triggered mobility (LTM).

### Summary of the Invention

In the prior art, after user equipment (UE) receives an RRC message indicating the UE through a PCCH (Paging Control Channel), one random access (RA) process is triggered. In this random access process, an air interface resource of a Preamble sent is a CBRA (Contention Based Random Access) resource configured by system information. The inventors have found that the failure of random access contention increases the transmission delay or increase the signaling overhead. In particular, when the UE is triggered for MT-SDT by the RRC (Radio Resource Control) message carried by the PCCH, the failure of random access contention increases the transmission delay or increases the signaling overhead. Therefore, the random access process triggered by the RRC message carried by the PCCH needs to be enhanced.

In the prior art, the air interface resource of the Preamble sent by the UE does not depend on the received MAC (Medium Access Control) CE (Control Element). The inventors have found that when the UE receives one MAC CE for the L1/L2 triggered mobility that indicates one candidate cell, if the uplink is not synchronized, it is necessary to obtain the uplink synchronization of the candidate cell through the random access process. How to obtain the uplink synchronization of the candidate cell as soon as possible needs to be enhanced.

In response to the above problems, the present application provides a random access solution. In the description of the above problems, an NR system is used as an example; the present application is also applicable to scenarios such as an LTE (Long-Term Evolution) system,and achieves technical effects similar to those of the NR; further, although the present application provides a specific implementation for MT-SDT, the present application can also be used in scenarios such as multicast MBS (Multicast/Broadcast Service) in the RRC inactive state, and achieves technical effects similar to those of the MT-SDT. Further, although the original intention of the present application is for a Uu air interface, the present application can also be used for a PC5 interface. Further, although the original intention of the present application is for a terminal and base station scenario, the present application is also applicable to a V2X (Vehicle-to-Everything) scenario, and communication scenarios between a terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and cost.

As one embodiment, an interpretation of terminologies in the present application refers to the definition in the specification protocol TS36 series of 3GPP.

As one embodiment, the interpretation of the terminologies in the present application refers to the definition in the specification protocol TS38 series of 3GPP.

As one embodiment, the interpretation of the terminologies in the present application refers to the definition in the specification protocol TS37 series of 3GPP.

As one embodiment, the interpretation of the terminologies in the present application refers to the definition in the specification protocol of IEEE (Institute of Electrical and Electronics Engineers).

It should be noted that, in the absence of conflict, embodiments and features in the embodiments in any node of the present application can be applied to any other node. In the absence of conflict, the embodiments and the features in the embodiments of the present application can be arbitrarily combined with each other.

The present application discloses a method used in a first node for wireless communication, characterized by comprising:
receiving a first message, the first message comprising a first identifier, and the first identifier indicating the first node;
after the first message is received, sending a first Preamble in a first random access process; and
in response to a behavior of sending the first Preamble, monitoring, in a first time window, a PDCCH (Physical Downlink Control Channel) identified by a first RNTI (Radio Network Temporary Identifier);
wherein the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

As one embodiment, the problem to be solved by the present application comprises: how to shorten the transmission delay or reduce the signaling overhead.

As one embodiment, the problem to be solved by the present application comprises: how to determine the air interface resource of the first Preamble.

As one embodiment, the problem to be solved by the present application comprises: how the first message indicates the air interface resource of the first Preamble.

As one embodiment, the characteristics of the above method comprise: the first message comprises the first information block; and the air interface resource of the first Preamble depends on the first information block.

As one embodiment, the characteristics of the above method comprise: the air interface resource of the first Preamble depends on the first information block in the first message.

As one embodiment, the benefits of the above method comprise: preventing the first node from selecting the air interface resource of the first Preamble from CBRA resources configured by system information, thereby reducing competition.

As one embodiment, the benefits of the above method comprise: preventing the first node from selecting the air interface resource of the first Preamble from the CBRA resources configured by the system information, thereby avoiding competition.

As one embodiment, the benefits of the above method comprise: shortening the transmission delay.

As one embodiment, the benefits of the above method comprise: reducing the signaling overhead.

According to one aspect of the present application, the above method is characterized in that an interpretation of the first information block depends on a second identifier, the second identifier is used for the first node, and the first identifier is different from the second identifier.

As one embodiment, the characteristics of the above method comprise: the first information block is interpreted by the first node according to the second identifier.

As one embodiment, the benefits of the above method comprise: preventing other UE from interpreting the first information block.

According to one aspect of the present application, the above method is characterized by comprising:
a first receiver for, before the first message is received, receiving a second message, the second message being used for determining to enter an RRC_INACTIVE state;
wherein the second message comprises the first identifier; the first message indicates that the first node performs data transmission in the RRC_INACTIVE state; and the first message is received in the RRC_INACTIVE state.

As one embodiment, the problem to be solved by the present application comprises: when the first message indicates that the first node performs data transmission in the RRC_INACTIVE state, how to perform data transmission in the RRC_INACTIVE state as soon as possible.

As one embodiment, the characteristics of the above method comprise: when the first message indicates that the first node performs data transmission in the RRC_INACTIVE state, the first message comprises the first information block.

As one embodiment, the benefits of the above method comprise: reducing random access contention and performing data transmission in the RRC_INACTIVE state as soon as possible.

As one embodiment, the benefits of the above method comprise: avoiding random access contention and preforming data transmission in the RRC_INACTIVE state as soon as possible.

According to one aspect of the present application, the above method is characterized in that the first information block indicates at least one of a Preamble sequence used by the first Preamble, or an uplink (UL) carrier occupied by the first Preamble, or an RS (Reference Signal) resource associated with the first Preamble, or a PRACH mask of the first Preamble.

As one embodiment, the characteristics of the above method comprise: the first information block indicates the air interface resource dedicated to the first Preamble.

As one embodiment, the benefits of the above method comprise: avoiding competition.

According to one aspect of the present application, the above method is characterized by comprising:
the first receiver for receiving a third message, the third message being used for determining at least one PRACH (Physical Random Access Channel) configuration;
wherein the first information block indicates a first PRACH configuration in the at least one PRACH configuration; and the first PRACH configuration is used for determining the air interface resource of the first Preamble.

As one embodiment, the characteristics of the above method comprise: the first information block indicates the first PRACH configuration dedicated to the first Preamble in a PRACH configuration configured by the third message.

As one embodiment, the benefits of the above method comprise: avoiding competition.

As one embodiment, the benefits of the above method comprise: reducing signaling overhead in the first message.

According to one aspect of the present application, the above method is characterized by comprising:
the first receiver for receiving first DCI, the first DCI (Downlink Control Information) being identified by the first RNTI, in response to the first DCI being received, the first random access process being considered to be successfully completed;
wherein the first RNTI is one C-RNTI (Cell RNTI).

As one embodiment, the characteristics of the above method comprise: monitoring the PDCCH scrambled by the C-RNTI for the first Preamble.

As one embodiment, the characteristics of the above method comprise: the first DCI is used for determining that the first random access process is successfully completed.

As one embodiment, the benefits of the above method comprise: completing the random access process as soon as possible.

As one embodiment, the benefits of the above method comprise: when the first message indicates that the first node performs data transmission in the RRC_INACTIVE state, performing data transmission in the RRC_INACTIVE state as soon as possible.

As one embodiment, the benefits of the above method comprise: avoiding scheduling an MAC RAR (Random Access Response).

According to one aspect of the present application, the above method is characterized by comprising:
the first receiver for receiving the first DCI and a first signaling, the first DCI being identified by the first RNTI, and the first DCI being used for scheduling the first signaling, in response to the first signaling being received, the first random access process being considered to be successfully completed;
wherein the first signaling comprises at least a timing advance.

According to one aspect of the present application, the above method is characterized in that the first RNTI is one C-RNTI, and the first signaling comprises one Absolute Timing Advance MAC CE.

As one embodiment, the characteristics of the above method comprise: monitoring the PDCCH scrambled by the C-RNTI for the first Preamble.

As one embodiment, the characteristics of the above method comprise: the Absolute Timing Advance MAC CE is used for determining that the first random access process is successfully completed.

As one embodiment, the benefits of the above method comprise: avoiding scheduling the MAC RAR.

The present application discloses a method used in a second node for wireless communication, characterized by comprising:
sending a first message, the first message comprising a first identifier, and the first identifier indicating a first node;
after the first message is sent, receiving a first Preamble in a first random access process; and
in response to a behavior of receiving the first Preamble, sending a PDCCH identified by a first RNTI;
wherein a sender of the first Preamble monitors, in a first time window, the PDCCH identified by the first RNTI; the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

According to one aspect of the present application, the above method is characterized in that an interpretation of the first information block depends on a second identifier, the second identifier is used for the first node, and the first identifier is different from the second identifier.

According to one aspect of the present application, the above method is characterized by comprising:
before the first message is sent, sending a second message, the second message being used for determining to enter an RRC_INACTIVE state;
wherein the second message comprises the first identifier; the first message indicates that the sender of the first Preamble performs data transmission in the RRC_INACTIVE state; and the first message is received in the RRC_INACTIVE state.

According to one aspect of the present application, the above is characterized in that the first information block indicates at least one of a Preamble sequence used by the first Preamble, or an uplink carrier occupied by the first Preamble, or an RS resource associated with the first Preamble, or a PRACH mask of the first Preamble.

According to one aspect of the present application, the above method is characterized by comprising:
sending a third message, the third message being used for determining at least one PRACH configuration;
wherein the first information block indicates a first PRACH configuration in the at least one PRACH configuration; and the first PRACH configuration is used for determining the air interface resource of the first Preamble.

According to one aspect of the present application, the above method is characterized by comprising:
sending first DCI, the first DCI being identified by the first RNTI;
wherein in response to the first DCI being received, the sender of the first Preamble considers that the first random access process is successfully completed; and the first RNTI is one C-RNTI.

According to one aspect of the present application, the above method is characterized by comprising:
sending the first DCI and a first signaling, the first DCI being identified by the first RNTI, and the first DCI being used for scheduling the first signaling;
wherein in response to the first signaling being received, the sender of the first Preamble considers that the first random access process is successfully completed; and the first signaling comprises at least a timing advance.

According to one aspect of the present application, the above method is characterized in that the first RNTI is one C-RNTI, and the first signaling comprises one Absolute Timing Advance MAC CE.

The present application discloses a first node for wireless communication, characterized by comprising:
a first receiver for receiving a first message, the first message comprising a first identifier, and the first identifier indicating the first node;
a first transmitter for, after the first message is received, sending a first Preamble in a first random access process; and
in response to a behavior of sending the first Preamble, the first receiver monitoring, in a first time window, a PDCCH identified by a first RNTI;
wherein the first message is one RRC message, and a logical channel used for carrying the first message is a PCCH; the first message comprises a first information block; an air interface resource of the first Preamble depends on the first information block; the air interface resource comprises at least one of a code domain resource, or a time domain resource, or a frequency domain resource.

The present application discloses a second node for wireless communication, characterized by comprising:
a second transmitter for sending a first message, the first message comprising a first identifier, and the first identifier indicating a first node;
a second receiver for, after the first message is sent, receiving a first Preamble in a first random access process; and
in response to a behavior of receiving the first Preamble, the second transmitter sending a PDCCH identified by a first RNTI;
wherein a sender of the first Preamble monitors, in a first time window, the PDCCH identified by the first RNTI; the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

The present application discloses a method used in a first node for wireless communication, characterized by comprising:
receiving a first message, the first message comprising a first identifier, and the first identifier indicating a first cell;
after the first message is received, sending a first Preamble in a first random access process;
in response to a behavior of sending the first Preamble, monitoring, in a first time window, a PDCCH identified by a first RNTI;
wherein the first message is one MAC CE; the first message comprises a first information block; an air interface resource of the first Preamble depends on the first information block; and the air interface resource comprises at least one of a code domain resource, or a time domain resource, or a frequency domain resource.

As one embodiment, the problem to be solved by the present application comprises: how to determine the air interface resource of the first Preamble.

As one embodiment, the problem to be solved by the present application comprises: how the first message indicates the air interface resource of the first Preamble.

As one embodiment, the characteristics of the above method comprise: the air interface resource of the first Preamble depends on the MAC CE.

As one embodiment, the benefits of the above method comprise: obtaining uplink synchronization of this candidate cell as soon as possible.

The present application discloses a method used in a second node for wireless communication, characterized by comprising:
sending a first message, the first message comprising a first identifier, and the first identifier indicating a first cell; and
after the first message is sent, receiving a first Preamble in a first random access process;
wherein in response to a behavior of sending the first Preamble, a sender of the first Preamble monitors, in a first time window, a PDCCH identified by a first RNTI, and the first message is one MAC CE; the first message comprises a first information block; an air interface resource of the first Preamble depends on the first information block; and the air interface resource comprises at least one of a code domain resource, or a time domain resource, or a frequency domain resource.

The present application discloses a first node for wireless communication, characterized by comprising:
a first receiver for receiving a first message, the first message comprising a first identifier, and the first identifier indicating a first cell; and
a first transmitter for, after the first message is received, sending a first Preamble in a first random access process;
in response to a behavior of sending the first Preamble, the first receiver monitoring, in a first time window, a PDCCH identified by a first RNTI;
wherein the first message is one MAC CE; the first message comprises a first information block; an air interface resource of the first Preamble depends on the first information block; and the air interface resource comprises at least one of a code domain resource, or a time domain resource, or a frequency domain resource.

The present application discloses a second node for wireless communication, characterized by comprising:
a second transmitter for sending a first message, the first message comprising a first identifier, and the first identifier indicating a first cell; and
a second receiver for, after the first message is sent, receiving a first Preamble in a first random access process;
wherein in response to a behavior of sending the first Preamble, a sender of the first Preamble monitors, in a first time window, a PDCCH identified by a first RNTI, and the first message is one MAC CE; the first message comprises a first information block; an air interface resource of the first Preamble depends on the first information block; and the air interface resource comprises at least one of a code domain resource, or a time domain resource, or a frequency domain resource.

As one embodiment, compared with the traditional solution, the present application has at least one of the following advantages:
- . Reduce competition;
- . Avoid competition;
- . Shorten transmission delay;
- . Reduce signaling overhead;
- . Avoid scheduling an MAC RAR;
- . Complete the random access process as soon as possible;
- . Perform data transmission in an RRC_INACTIVE state as soon as possible; and
- . Obtain uplink synchronization as soon as possible.

In the prior art, RRC messages are used for radio resource control. RRC messages dedicated to UE (User Equipment) are transmitted through dedicated logical channels. RRC messages not transmitted through dedicated logical channels are not UE-specific. In particular, when the UE does not establish an RRC connection, the UE cannot receive RRC messages through dedicated logical channels. The inventor has found that RRC messages not transmitted through dedicated logical channels cannot configure dedicated information for UE to send or receive signals, thereby increasing delay or/and increasing signaling overhead. Therefore, how RRC messages not transmitted through dedicated logical channels carry UE-specific information needs to be enhanced.

In view of the above problems, the present application provides a solution for wireless resource control. In the description of the above problems, an NR system is used as an example; The present application is also applicable to scenarios such as LTE systems; further, although the present application provides a specific implementation for MT-SDT, the present application can also be used in scenarios such as multicast MBS (Multicast/Broadcast Service), and achieves technical effects similar to those of the MT-SDT. Further, although the original intention of the present application is for a Uu air interface, the present application can also be used for a PC5 interface. Further, although the original intention of the present application is for a terminal and base station scenario, the present application is also applicable to a V2X (Vehicle-to-Everything) scenario, and communication scenarios between a terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and cost.

As one embodiment, an interpretation of terminologies in the present application refers to the definition in the specification protocol TS36 series of 3GPP.

As one embodiment, the interpretation of the terminologies in the present application refers to the definition in the specification protocol TS38 series of 3GPP.

As one embodiment, the interpretation of the terminologies in the present application refers to the definition in the specification protocol TS37 series of 3GPP.

As one embodiment, the interpretation of the terminologies in the present application refers to the definition in the specification protocol of IEEE (Institute of Electrical and Electronics Engineers).

It should be noted that, in the absence of conflict, embodiments and features in the embodiments in any node of the present application can be applied to any other node. In the absence of conflict, the embodiments and the features in the embodiments of the present application can be arbitrarily combined with each other.

The present application discloses a method used in a first node for wireless communication, characterized by comprising:
receiving a first message, the first message being one RRC message, the first message being not transmitted through a dedicated logical channel, the first message comprising a first identifier, and the first identifier indicating the first node; and after the first message is received, processing a first signal;
wherein a behavior of processing the first signal depends on a target information block, and at least the former of a first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, the problem to be solved by the present application comprises: how RRC messages not transmitted through dedicated logical channels carry UE-specific information.

As one embodiment, the problem to be solved by the present application comprises: how to prevent other UE from using UE-specific information carried by RRC messages that are not transmitted through dedicated logical channels.

As one embodiment, the characteristics of the above method comprise: the first message comprises the first identifier, and the first identifier indicates the first node.

As one embodiment, the characteristics of the above method comprise: the first message comprises the first information block, and at least the former of the first information block and the second identifier is used for determining the target information block; and the target information block is dedicated to the first node.

As one embodiment, the characteristics of the above method comprise: the first message comprises only the former of the first information block and the target information block.

As one embodiment, the characteristics of the above method comprise: the behavior of processing the first signal depends on the latter of the first information block and the target information block.

As one embodiment, the benefits of the above method comprise: the first message not transmitted through a dedicated logical channel carries information dedicated to the first node to avoid the use of the dedicated logical channel to transmit another RRC message, thereby shortening the delay.

As one embodiment, the benefits of the above method comprise: the first message does not directly carry the target information block, thereby avoiding other UE from using the information of the target information block.

As one embodiment, the benefits of the above method comprise: reducing signaling overhead.

According to one aspect of the present application, the above method is characterized in that at least part of the first information block and a target identifier are used for determining the target information block, and the second identifier is used for generating the target identifier.

According to one aspect of the present application, the above method is characterized in that the first information block comprises at least one bit; and the second identifier is one bit string.

According to one aspect of the present application, the above method is characterized by comprising:
before the first message is received, receiving at least the former of a first sub-message and a second sub-message;
wherein the first sub-message comprises the first identifier; and the second sub-message comprises the second identifier.

As one embodiment, the characteristics of the above method comprise: the first identifier is pre-configured, and only the former of the first information block and the second identifier is used for determining the target information block.

As one embodiment, the characteristics of the above method comprise: the first identifier and the second identifier are pre-configured, and the first information block and the second identifier are used for determining the target information block.

As one embodiment, the benefits of the above method comprise: easy to implement.

As one embodiment, the benefits of the above method comprise: facilitating the acquisition of the target information block.

According to one aspect of the present application, the above method is characterized in that the first sub-message is used for determining to enter an RRC_INACTIVE state; the logical channel used for carrying the first message is a PCCH (Paging Control Channel); and the first message indicates that the first node performs data transmission in the RRC_INACTIVE state.

As one embodiment, the characteristics of the above method comprise: when the first message indicates that the first node performs data transmission in the RRC_INACTIVE state, at least the former of the first information block and the second identifier is used for determining the target information block.

As one embodiment, the benefits of the above method comprise: realizing the fastest transmission of MT-SDT.

According to one aspect of the present application, the above method is characterized in that the meaning of the phrase "a behavior of processing the first signal depends on a target information block" comprises: the target information block indicates an air interface resource used for the first signal; and the air interface resource comprises at least one of a code domain resource, or a time domain resource, or a frequency domain resource.

According to one aspect of the present application, the above method is characterized in that the first signal is one Preamble.

According to one aspect of the present application, the above method is characterized in that the first signal is one piece of DCI (Downlink Control Information).

The present application discloses a method used in a second node for wireless communication, characterized by comprising:
sending a first message, the first message being one RRC message, the first message being not transmitted through a dedicated logical channel, the first message comprising a first identifier, and the first identifier indicating a first node; and after the first message is sent, processing a first signal;
wherein a behavior of processing the first signal depends on a target information block, and at least the former of a first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

According to one aspect of the present application, the above method is characterized in that at least part of the first information block and a target identifier are used for determining the target information block, and the second identifier is used for generating the target identifier.

According to one aspect of the present application, the above method is characterized in that the first information block comprises at least one bit; and the second identifier is one bit string.

According to one aspect of the present application, the above method is characterized by comprising:
before the first message is sent, sending at least the former of a first sub-message and a second sub-message;
wherein the first sub-message comprises the first identifier; and the second sub-message comprises the second identifier.

According to one aspect of the present application, the above method is characterized in that the first sub-message is used for determining to enter an RRC_INACTIVE state; a logical channel used for carrying the first message is a PCCH; and the first message indicates that the first node performs data transmission in the RRC_INACTIVE state.

According to one aspect of the present application, the above method is characterized in that the meaning of the phrase "a behavior of processing the first signal depends on a target information block" comprises: the target information block indicates an air interface resource used for the first signal; the air interface resource comprises at least one of a code domain resource, or a time domain resource, or a frequency domain resource.

According to one aspect of the present application, the above method is characterized in that the first signal is one Preamble.

According to one aspect of the present application, the above method is characterized in that the first signal is one piece of DCI.

The present application discloses a first node for wireless communication, characterized by comprising:
a first processing device for receiving a first message, the first message being one RRC message, the first message being not transmitted through a dedicated logical channel, the first message comprising a first identifier, and the first identifier indicating the first node; and after the first message is received, processing a first signal;
wherein a behavior of processing the first signal depends on a target information block, and at least the former of a first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

The present application discloses a second node for wireless communication, characterized by comprising:
a second processing device for sending a first message, the first message being one RRC message, the first message being not transmitted through a dedicated logical channel, the first message comprising a first identifier, and the first identifier indicating a first node; and after the first message is sent, processing a first signal;
wherein a behavior of processing the first signal depends on a target information block, and at least the former of a first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, compared with the traditional solution, the present application has at least one of the following advantages:
- . Easy to implement;
- . Prevent other UE from using information of the target information block;
- . Facilitate the acquisition of the target information block;
- . Realize the fastest transmission of MT-SDT;
- . Shorten delay; and
- . Reduce signaling overhead.

### Brief Description of the Drawings

Other features, purposes and advantages of the present application will become more apparent from reading the detailed description of the non-limiting embodiments made with reference to the following drawings:
FIG. 1A shows a flowchart of transmission of a first message, a first Preamble, and a PDCCH identified by a first RNTI according to one embodiment of the present application;
FIG. 1B shows a flowchart of transmission of a first message and a first signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5A shows a flowchart of radio signal transmission according to one embodiment of the present application;
FIG. 5B shows a flowchart of radio signal transmission according to one embodiment of the present application;
FIG. 6A shows a flowchart of radio signal transmission according to another embodiment of the present application;
FIG. 6B shows a schematic diagram of at least part of a first information block and a target identifier being used for determining a target information block according to one embodiment of the present application;
FIG. 7A shows a flowchart of radio signal transmission according to yet another embodiment of the present application;
FIG. 7B shows a schematic diagram of a second identifier being one bit string according to one embodiment of the present application;
FIG. 8A shows a schematic diagram of an interpretation of a first information block depending on a second identifier according to one embodiment of the present application;
FIG. 8B shows a schematic diagram of a first message indicating that a first node performs data transmission in an RRC_INACTIVE state according to one embodiment of the present application;
FIG. 9A shows a schematic diagram of an air interface resource of a first Preamble depending on a first information block according to one embodiment of the present application;
FIG. 9B shows a schematic diagram of processing of a first signal depending on a target information block according to one embodiment of the present application;
FIG. 10A shows a schematic diagram of a first RNTI and a first signaling according to one embodiment of the present application;
FIG. 10B shows a schematic diagram of a first signal being one Preamble according to one embodiment of the present application;
FIG. 11A shows a flowchart of transmission of a first message, a first Preamble, and a PDCCH identified by a first RNTI according to another embodiment of the present application;
FIG. 11B shows a schematic diagram of a first signal being one piece of DCI according to one embodiment of the present application;
FIG. 12A shows a structural block diagram of a processing apparatus used in a first node according to one embodiment of the present application;
FIG. 12B shows a schematic diagram of at least part of bits in a first information block and a target identifier subjected to a first operation to obtain a target information block according to one embodiment of the present application;
FIG. 13A shows a structural block diagram of a processing apparatus used in a second node according to one embodiment of the present application;
FIG. 13B shows a structural block diagram of a processing apparatus used in a first node according to one embodiment of the present application;
FIG. 14 shows a structural block diagram of a processing apparatus used in a second node according to one embodiment of the present application.

### Detailed Description of Embodiments

The technical solution of the present application will be further described in detail below in conjunction with the drawings. It should be noted that, in the absence of conflict, embodiments and features in the embodiments in the present application may be arbitrarily combined with each other.

### Embodiment 1A

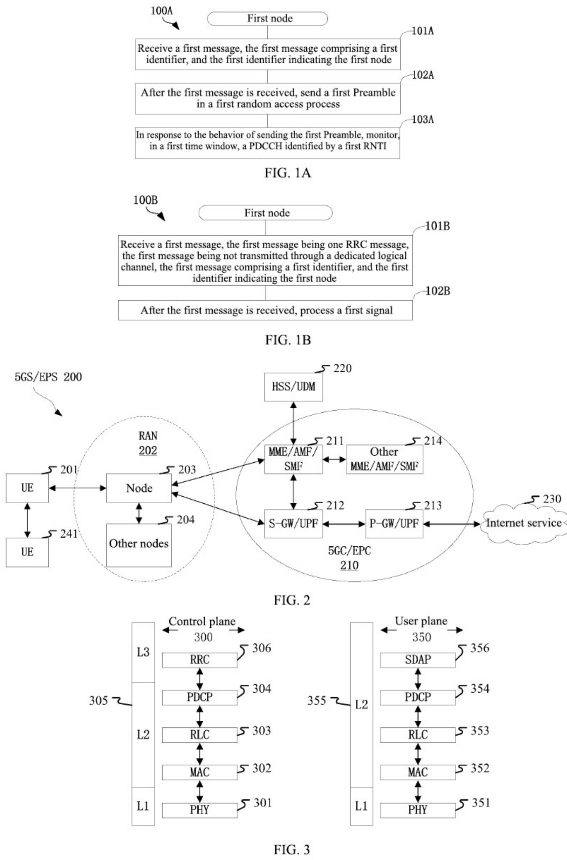

Embodiment 1 illustrates a flowchart of transmission of a first message, a first Preamble, and a PDCCH identified by a first RNTI according to one embodiment of the present application, as shown in FIG. 1A. In FIG. 1A, each block represents one step. It is particularly emphasized that the order of the blocks in the figure does not represent the temporal relationship between the steps represented.

In Embodiment 1A, a first node in the present application receives the first message in step 101A, the first message comprising a first identifier, and the first identifier indicating the first node; in step 102A, after the first message is received, sends the first preamble in a first random access process; and in step 103A, in response to a behavior of sending the first Preamble, monitors, in a first time window, the PDCCH identified by the first RNTI, wherein the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

As one embodiment, the first message is received in an RRC_INACTIVE state.

As one embodiment, a sender of the first message is a maintenance base station of a first cell.

As one embodiment, the first cell is a PCell (Primary Cell) before the first node enters the RRC_INACTIVE state.

As one embodiment, the first cell is a cell where the first node receives the last RRCRelease message before the first message is received.

As one embodiment, the sender of the first message is the maintenance base station of a resident cell of the first node.

As one embodiment, the sender of the first message is the maintenance base station of one cell in an RNA (RAN-based Notification Area) of the first node.

As one embodiment, the RNA of the first node comprises at least one cell.

As one embodiment, the RNA of the first node is pre-configured.

As one embodiment, the first message is one RRC message, and the logical channel used for carrying the first message is the PCCH.

As one embodiment, the first message is a cell common signaling.

As one embodiment, the first message is a downlink message.

As one embodiment, the first message is used for paging.

As one embodiment, the first message is used for RAN (Radio Access Network) paging.

As one embodiment, the first message is triggered by an NG (Next Generation)-RAN.

As one embodiment, the first message is one Paging message.

As one embodiment, the first message comprises at least one PagingRecord field.

As one embodiment, the first message comprises at least one field having a name that comprises a PagingRecord.

As one embodiment, the first message comprises at least one PagingRecordList.

As one embodiment, the first message comprises at least one field having a name that comprises a PagingRecordList.

As one embodiment, the first message comprises one PagingRecord field, and the one PagingRecord field comprises the first identifier.

As one embodiment, the first message comprises one RRC field having a name that comprises the PagingRecord, and the one RRC field having the name that comprises the PagingRecord comprises the first identifier.

As one embodiment, the first identifier matches a fullI-RNTI of the first node.

As one embodiment, the first identifier is assigned to the first node.

As one embodiment, the first identifier indicates the first node in the first cell.

As one embodiment, the first identifier indicates the first node in the RNA of the first node.

As one embodiment, the first identifier is one bit string.

As one embodiment, the first identifier comprises a positive integer number of bits.

As one embodiment, the first identifier is one bit string with a length of 40 bits.

As one embodiment, the first identifier is one bit string with a length of 24 bits.

As one embodiment, the first identifier is one PagingUE-Identity.

As one embodiment, the first identifier is one ng-5G-S-TMSI.

As one embodiment, the first identifier is one fullI-RNTI.

As one embodiment, the first identifier is one NG-5G-S-TMSI.

As one embodiment, the first identifier is one I-RNTI-Value.

As one embodiment, the first identifier is one ShortI-RNTI-Value.

As one embodiment, the first identifier matches the fullI-RNTI stored by the first node.

As one embodiment, the first identifier matches the shortI-RNTI stored by the first node.

As one embodiment, the first message comprises a first field and a second field, and the first field and the second field indicate that the first node performs data transmission in the RRC_INACTIVE state.

As one embodiment, the first field and the second field are used together for indicating that the first node performs data transmission in the RRC_INACTIVE state.

As one embodiment, a value of the first field and a value of the second field indicate that the first node performs data transmission in the RRC_INACTIVE state.

As one embodiment, the first message comprises the first field and the second field, the first field comprises the first identifier, and the second field is used for indicating that data transmission is performed in the RRC_INACTIVE state.

As one embodiment, the first message comprises the first field, and the first field comprises the first identifier.

As one sub-embodiment of this embodiment, the first message comprises one PagingRecord field, and the one PagingRecord field comprises the first field, and the first field comprises the first identifier.

As one sub-embodiment of this embodiment, the first message comprises one RRC field having a name that comprises the PagingRecord, the one RRC field having the name that comprises the PagingRecord comprises the first field, and the first field comprises the first identifier.

As one sub-embodiment of this embodiment, the first field is one ue-Identity field.

As one sub-embodiment of this embodiment, the first field is one PagingUE-Identity field.

As one sub-embodiment of this embodiment, the first field is one fullI-RNTI field.

As one sub-embodiment of this embodiment, the first field is one I-RNTI-Value field.

As one sub-embodiment of this embodiment, the first field is one ShortI-RNTI-Value field.

As one embodiment, the first message triggers the first Preamble.

As one embodiment, the first message triggers the first random access process, and the first Preamble is sent in the first random access process.

As one embodiment, a recipient of the first Preamble is different from the sender of the first message.

As one embodiment, the recipient of the first Preamble is the same as the sender of the first message.

As one embodiment, the recipient of the first Preamble is the maintenance base station of the first cell.

As one embodiment, the first Preamble is an initial Preamble in the first random access process.

As one embodiment, the first Preamble is any Preamble in the first random access process.

As one embodiment, the first Preamble is one Preamble.

As one embodiment, the first random access process is executed on the first cell.

As one embodiment, the first random access process is a 4-step random access process.

As one embodiment, the first random access process is triggered by an RRC sublayer.

As one embodiment, the first random access process is triggered by a first RRC recovery process.

As one embodiment, the first Preamble is used for a CFRA (Contention Free Random Access).

As one embodiment, the air interface resource of the first Preamble comprises a Preamble sequence used by the first Preamble.

As one embodiment, the air interface resource of the first Preamble comprises an uplink carrier occupied by the first Preamble.

As one embodiment, the air interface resource of the first Preamble comprises a downlink radio signal associated with the first Preamble.

As one embodiment, the air interface resource of the first Preamble comprises a PRACH mask of the first Preamble.

As one embodiment, a first condition set is satisfied to trigger the first random access process of the behavior; the first condition set comprises at least: a measurement result for a first RS resource is better than or not worse than a first threshold; the first RS resource is associated with the first Preamble; and the first threshold is configurable.

As one embodiment, the PDCCH identified by the first RNTI is monitored on a first search space.

As one sub-embodiment of this embodiment, the first search space is one CSS (Common search space).

As one sub-embodiment of this embodiment, the first search space is one USS (UE-specific search space).

As one embodiment, the behavior of sending the first Preamble is used for determining to start the first time window.

As one embodiment, in response to the behavior of sending the first Preamble, the first time window is started.

As one embodiment, the first time window is one ra-ResponseWindow.

As one embodiment, the first time window is one time window having a name that comprises the ra-ResponseWindow.

As one embodiment, the first time window is configured by the RRC message.

As one embodiment, the first time window is configured by an SIB1 (System Information Block 1) message.

As one embodiment, the first time window is configured by a second message in the present application.

As one embodiment, the first RNTI is one C-RNTI.

As one sub-embodiment of this embodiment, the PDCCH identified by the first RNTI is used for scheduling a random access response.

As one sub-embodiment of this embodiment, the PDCCH identified by the first RNTI is used for scheduling a UL grant for a new transmission.

As one sub-embodiment of this embodiment, the PDCCH identified by the first RNTI is used for scheduling a DL-SCH (Downlink Shared Channel).

As one sub-embodiment of this embodiment, any PDCCH identified by the first RNTI is monitored in the first time window.

As one sub-embodiment of this embodiment, any PDCCH of the first cell that is identified by the first RNTI is monitored in the first time window.

As one sub-embodiment of this embodiment, the PDCCH identified by the first RNTI for the random access response is monitored in the first time window.

As one sub-embodiment of this embodiment, the PDCCH of the first cell that is identified by the first RNTI for the random access response is monitored in the first time window.

As one sub-embodiment of this embodiment, the one C-RNTI is the C-RNTI of the first node in the first cell.

As one sub-embodiment of this embodiment, the one C-RNTI is the C-RNTI of the first node in a SpCell (Special Cell) of the first node.

As one sub-embodiment of this embodiment, the one C-RNTI is the C-RNTI of the first node in the PCell of the first node.

As one embodiment, the first RNTI is one RA-RNTI.

As one sub-embodiment of this embodiment, the PDCCH identified by the first RNTI for the random access response is monitored in the first time window.

As one sub-embodiment of this embodiment, the one RA-RNTI is determined according to the air interface resource of the first Preamble.

As one sub-embodiment of this embodiment, the PDCCH identified by the first RNTI is used for scheduling the random access response.

As one sub-embodiment of this embodiment, the PDCCH identified by the first RNTI is used for scheduling an MAC RAR.

As one embodiment, the first RNTI is any one of one C-RNTI or one RA-RNTI.

As one embodiment, the PDCCH identified by the first RNTI is the PDCCH of the first cell.

As one embodiment, the first message indicates the first information block.

As one embodiment, the first message implicitly indicates the first information block.

As one embodiment, the first message explicitly indicates the first information block.

As one embodiment, the first message comprises information used for determining the first information block.

As one embodiment, the first information block is associated with the first field.

As one embodiment, the first information block is for the first field.

As one embodiment, the first information block depends on the first field.

As one embodiment, the first information block is valid only for the first field.

As one embodiment, the first information block is configured to the PagingRecord field comprising the first identifier in the first message.

As one embodiment, the first information block belongs to the PagingRecord field comprising the first identifier in the first message.

As one embodiment, the first information block is associated with the PagingRecord field comprising the first identifier in the first message.

As one embodiment, the first information block is configured to the RRC field in the first message that comprises the first identifier and has a name that comprises the PagingRecord.

As one embodiment, the first information block belongs to the RRC field in the first message that comprises the first identifier and has a name that comprises the PagingRecord.

As one embodiment, the first information block is associated with the RRC field in the first message that comprises the first identifier and has a name that comprises the PagingRecord.

As one embodiment, the first information block comprises at least one RRC field.

As one embodiment, the first information block is one RRC field.

As one embodiment, the first information block is a plurality of RRC fields.

As one embodiment, the first information block comprises one RRC field, and a value of the one RRC field is one bit string.

As one embodiment, the first information block comprises a plurality of RRC fields, and the value of each RRC field in the plurality of RRC fields is one bit string.

As one embodiment, the first information block comprises a plurality of RRC fields, and the value of at least one RRC field in the plurality of RRC fields is one bit string.

As one embodiment, at least part of the air interface resource of the first Preamble depends on the first information block.

As one embodiment, the air interface resource of the first Preamble depends on at least the first information block.

As one embodiment, the air interface resource of the first Preamble depends on all fields in the first information block.

As one embodiment, the air interface resource of the first Preamble depends on part of fields in the first information block.

As one embodiment, the first information block indicates the air interface resource of the first Preamble.

As one embodiment, the first information block is used for determining the air interface resource of the first Preamble.

As one embodiment, at least one of the code domain resource, or the time domain resource, or the frequency domain resource of the first Preamble depends on the first information block.

As one embodiment, the code domain resource comprises the Preamble sequence.

As one embodiment, the code domain resource comprises an index of the Preamble sequence.

As one embodiment, the code domain resource comprises a Preamble resource.

As one embodiment, the time domain resource comprises resources occupied by a PRACH occasion in a time domain.

As one embodiment, the time domain resource comprises an OFDM (Orthogonal Frequency Division Multiplexing) symbol occupied by the PRACH occasion in the time domain.

As one embodiment, the time domain resource comprises an initial OFDM symbol occupied by the PRACH occasion in the time domain.

As one embodiment, the time domain resource comprises the index of the initial OFDM symbol occupied by the PRACH occasion in the time domain.

As one embodiment, the time domain resource comprises a time slot occupied by the PRACH occasion in the time domain.

As one embodiment, the time domain resource comprises the index of an initial time slot occupied by the PRACH occasion in the time domain in one system frame.

As one embodiment, the frequency domain resource comprises a subcarrier spacing.

As one embodiment, the frequency domain resource comprises the subcarrier spacing used for determining the index of the initial time slot occupied by the PRACH occasion in the time domain in one system frame.

As one embodiment, the frequency domain resource comprises a resource occupied by the PRACH occasion in the frequency domain.

As one embodiment, the frequency domain resource comprises the index of the PRACH occasion in the frequency domain.

As one embodiment, the frequency domain resource comprises the uplink carrier for sending the first Preamble.

### Embodiment 1B

Embodiment 1B illustrates a flowchart of transmission of a first message and a first signal according to one embodiment of the present application, as shown in FIG. 1B. In FIG. 1B, each block represents one step. It is particularly emphasized that the order of the blocks in the figure does not represent the temporal relationship between the steps represented.

In Embodiment 1B, a first node in the present application receives the first message in step 101B, the first message being one RRC message, the first message being not transmitted through a dedicated logical channel, the first message comprising a first identifier, and the first identifier indicating the first node; and in step 102B, after the first message is received, processes the first signal, wherein a behavior of processing the first signal depends on a target information block, and at least the former of a first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, the first message is a downlink message.

As one embodiment, the first message is a sidelink (SL) message.

As one embodiment, the first message is used for broadcasting system information.

As one embodiment, the first message is used for configuring control information applied to an MBS broadcast service.

As one embodiment, the first message is used for paging.

As one embodiment, the first message is used for RAN (Radio Access Network) paging.

As one embodiment, the first message is triggered by an NG (Next Generation)-RAN.

As one embodiment, the first message is not carried by any signaling radio bearer (SRB).

As one embodiment, the signaling radio bearer of the first message is one default RB.

As one embodiment, the signaling radio bearer of the first message is one SRB.

As one embodiment, the signaling radio bearer of the first message is one MRB (MBS Radio Bearer).

As one embodiment, the signaling radio bearer of the first message is one SRB0 (Signaling Radio Bearer 0).

As one embodiment, the meaning of the phrase "the first message is not transmitted through a dedicated logical channel" refers to: a logical channel used for carrying the first message is not the dedicated logical channel of the first node.

As one embodiment, the meaning of the phrase "the first message is not transmitted through a dedicated logical channel" refers to: the first message is transmitted through a common logical channel.

As one embodiment, the dedicated logical channel refers to a DCCH (Dedicated Control Channel).

As one embodiment, the dedicated logical channel comprises at least the DCCH.

As one embodiment, the dedicated logical channel comprises a DTCH (Dedicated Traffic Channel).

As one embodiment, the meaning of the phrase "the first message is not transmitted through a dedicated logical channel" refers to: the first message is transmitted through a PCCH.

As one embodiment, the meaning of the phrase "the first message is not transmitted through a dedicated logical channel" refers to: the first message is transmitted through a BCCH (Broadcast Control Channel).

As one embodiment, the meaning of the phrase "the first message is not transmitted through a dedicated logical channel" refers to: the first message is transmitted through a CCCH (Common Control Channel).

As one embodiment, the meaning of the phrase "the first message is not transmitted through a dedicated logical channel" refers to: the first message is transmitted through an MCCH (MBS Control Channel).

As one embodiment, the meaning of the phrase "the first message is not transmitted through a dedicated logical channel" refers to: the first message is transmitted through an SBCCH (Sidelink Broadcast Control Channel).

As one embodiment, one field in the first message comprises the first identifier.

As one embodiment, one field in the first message indicates the first identifier.

As one embodiment, one field in the first message is set to the first identifier.

As one embodiment, the first message comprises at least one identifier, and the first identifier is one identifier in the at least one identifier.

As one embodiment, the first identifier indicates the first node in at least one cell.

As one embodiment, the first identifier indicates the first node in a first cell.

As one embodiment, the first identifier indicates the first node in an RNA of the first node.

As one embodiment, the first identifier is assigned by an MAC sublayer.

As one embodiment, the first identifier is assigned by an RRC sublayer.

As one embodiment, the first identifier is assigned by a protocol layer above the RRC sublayer.

As one embodiment, the first identifier is assigned to the first node.

As one embodiment, the first identifier comprises at least one bit.

As one embodiment, the first identifier is one bit string.

As one embodiment, the first identifier is one bit string with a length of 40 bits.

As one embodiment, the first identifier is one bit string with a length of 24 bits.

As one embodiment, the first identifier is one identifier of the first node.

As one embodiment, the first identifier is one RNTI (Radio Network Temporary Identifier).

As one embodiment, the first identifier is one UE_ID.

As one embodiment, the first identifier is one PagingUE-Identity.

As one embodiment, the first identifier is one ng-5G-S-TMSI.

As one embodiment, the first identifier is one fullI-RNTI.

As one embodiment, the first identifier is one NG-5G-S-TMSI.

As one embodiment, the first identifier is one I-RNTI-Value.

As one embodiment, the first identifier is one ShortI-RNTI-Value.

As one embodiment, the first identifier matches the fullI-RNTI stored by the first node.

As one embodiment, the first identifier matches a shortI-RNTI stored by the first node.

As one embodiment, the first message comprises a plurality of fields, and the plurality of fields are used for indicating the first information block and the first identifier.

As one embodiment, the first information block and the first identifier belong to the same RRC field in the first message.

As one embodiment, after the first message is received, the RRC sublayer indicates a lower layer to process the first signal.

As one embodiment, in response to the first message being received, the first signal is processed.

As one embodiment, after the first information block in the first message is received, the first signal is processed.

As one embodiment, after the target information block is determined according to at least the former of the first information block and the second identifier, the first signal is processed.

As one embodiment, after the RRC sublayer indicates the lower layer to process the first signal according to the target information block, the first signal is processed.

As one embodiment, "a behavior of processing the first signal depends on a target information block" comprises: processing the first signal according to at least the target information block.

As one embodiment, "a behavior of processing the first signal depends on a target information block" comprises: the target information block is used for determining an air interface resource for processing the first signal.

As one embodiment, "a behavior of processing the first signal depends on a target information block" comprises: the target information block is used for determining power for processing the first signal.

As one embodiment, "a behavior of processing the first signal depends on a target information block" comprises: the target information block is used for determining an MCS for processing the first signal.

As one embodiment, the target information block indicates the air interface resource used for the first signal.

As one embodiment, the target information block indicates configuration information of the air interface resource used for the first signal.

As one embodiment, the target information block indicates one piece of configuration information.

As one embodiment, the target information block indicates one PRACH (Physical Random Access Channel) resource, and the first signal is one Preamble.

As one embodiment, the target information block indicates one PDCCH (Physical Downlink Control Channel) configuration information, and the first signal is one piece of DCI.

As one embodiment, the target information block indicates one UL grant, and the first signal is one piece of PUSCH (Physical Uplink Shared Channel) transmission.

As one embodiment, the target information block indicates one CG (Configured Grant) resource, and the first signal is one piece of PUSCH transmission.

As one embodiment, the target information block is a true value of the first information block.

As one embodiment, the target information block is obtained after a value of the first information block is decrypted.

As one embodiment, in response to receiving the first information block, the first processing device determines the target information block according to at least the former of the first information block and the second identifier.

As one embodiment, in response to receiving the first information block, the RRC sublayer of the first node determines the target information block according to at least the former of the first information block and the second identifier.

As one embodiment, only the former of the first information block and the second identifier is used for determining the target information block.

As one sub-embodiment of this embodiment, the determination of the target information block is unrelated to the second identifier.

As one sub-embodiment of this embodiment, the second identifier does not exist.

As one sub-embodiment of this embodiment, the second identifier exists.

As one sub-embodiment of this embodiment, in response to receiving the first information block, the target information block is determined according to only the former of the first information block and the second identifier.

As one sub-embodiment of this embodiment, the first information block explicitly indicates one encryption rule.

As one sub-embodiment of this embodiment, the first information block explicitly indicating one decryption rule.

As one sub-embodiment of this embodiment, the first information block implicitly indicates one encryption rule.

As one sub-embodiment of this embodiment, the first information block implicitly indicates one decryption rule.

As one sub-embodiment of this embodiment, before the first message, one encryption rule is determined.

As one sub-embodiment of this embodiment, before the first message, one decryption rule is determined.

As one sub-embodiment of this embodiment, before the first message, one message is received, and the one message indicates one encryption rule.

As one sub-embodiment of this embodiment, before the first message, one message is received, and the one message indicates one decryption rule.

As one sub-embodiment of this embodiment, the one message received before the first message is one RRC message.

As one sub-embodiment of this embodiment, the one message received before the first message is one RRCRelease message.

As one sub-embodiment of this embodiment, the one message received before the first message is one RRCReconfiguration message.

As one sub-embodiment of this embodiment, the one message received before the first message is one MAC signaling.

As one sub-embodiment of this embodiment, the one message received before the first message is one physical layer signaling.

As one sub-embodiment of this embodiment, the first information block is decrypted according to the decryption rule corresponding to the encryption rule to obtain the target information block.

As one sub-embodiment of this embodiment, the first information block is decrypted according to the one decryption rule to obtain the target information block.

As one embodiment, the first information block and the second identifier are used for determining the target information block.

As one sub-embodiment of this embodiment, the second identifier is calculated by the first node.

As one sub-embodiment of this embodiment, the second identifier is selected by the first node.

As one sub-embodiment of this embodiment, the second identifier is determined by the first node.

As one sub-embodiment of this embodiment, the second identifier is pre-configured.

As one sub-embodiment of this embodiment, the second identifier is assigned by the RRC sublayer.

As one sub-embodiment of this embodiment, the second identifier is assigned by the MAC sublayer.

As one sub-embodiment of this embodiment, the second identifier is assigned by a higher layer of the RRC sublayer.

As one sub-embodiment of this embodiment, the second identifier is assigned by a second node.

As one sub-embodiment of this embodiment, the second identifier is assigned to the first node.

As one sub-embodiment of this embodiment, the second identifier is configured to the first node.

As one sub-embodiment of this embodiment, the second identifier is stored by the first node.

As one sub-embodiment of this embodiment, the second identifier is used by the first node for CRC (Cyclic redundancy check) scrambling.

As one sub-embodiment of this embodiment, the second identifier is used by the first node for monitoring a PDCCH.

As one sub-embodiment of this embodiment, the second identifier is used for identifying the first node.

As one sub-embodiment of this embodiment, the second identifier is used for identifying the first node in the first cell.

As one sub-embodiment of this embodiment, the second identifier indicates the first node in at least one cell.

As one sub-embodiment of this embodiment, the second identifier indicates the first node in a designated cell.

As one sub-embodiment of this embodiment, the second identifier indicates the first node in the RNA of the first node.

As one sub-embodiment of this embodiment, the second identifier indicates the first node in one TAC.

As one sub-embodiment of this embodiment, the second identifier is one bit string.

As one sub-embodiment of this embodiment, the second identifier comprises at least one bit.

As one sub-embodiment of this embodiment, the second identifier indicates the first node.

As one sub-embodiment of this embodiment, the second identifier indicates one secret key.

As one sub-embodiment of this embodiment, the second identifier indicates one encryption rule.

As one sub-embodiment of this embodiment, the second identifier indicates one decryption rule.

As one sub-embodiment of this embodiment, the number of bits of the second identifier is not equal to that of the first identifier.

As one sub-embodiment of this embodiment, the number of bits of the second identifier is equal to that of the first identifier.

As one sub-embodiment of this embodiment, the second identifier is one RNTI of the first node.

As one sub-embodiment of this embodiment, the second identifier is one shortI-RNTI of the first node.

As one sub-embodiment of this embodiment, the second identifier is one shortI-RNTI stored by the first node.

As one sub-embodiment of this embodiment, the second identifier is one C-RNTI (Cell RNTI) of the first node.

As one sub-embodiment of this embodiment, the second identifier is the C-RNTI stored by the first node.

As one sub-embodiment of this embodiment, the second identifier is the C-RNTI of the first node in the first cell.

As one sub-embodiment of this embodiment, the second identifier is not the first identifier.

As one sub-embodiment of this embodiment, the name of the second identifier is different from that of the first identifier.

As one sub-embodiment of this embodiment, the second identifier and the first identifier are configured by different fields.

As one sub-embodiment of this embodiment, the second identifier and the first identifier are configured by different signalings.

As one sub-embodiment of this embodiment, in response to receiving the first information block, the target information block is determined according to the first information block and the second identifier.

As one sub-embodiment of this embodiment, the true value of the first information block depends on the second identifier.

As one sub-embodiment of this embodiment, the meaning of the first information block depends on the second identifier.

As one sub-embodiment of this embodiment, information indicated by the first information block depends on the second identifier.

As one sub-embodiment of this embodiment, the decryption of the first information block depends on the second identifier.

As one sub-embodiment of this embodiment, the first information block is decrypted according to the second identifier to obtain the target information block.

As one sub-embodiment of this embodiment, the first information block is decrypted according to the decryption rule corresponding to the encryption rule to obtain the target information block.

As one sub-embodiment of this embodiment, the first information block is decrypted according to the one decryption rule to obtain the target information block.

As one embodiment, the one encryption rule is one encryption algorithm.

As one embodiment, the one encryption rule is used for determining the target information block according to only the former of the first information block and the second identifier.

As one embodiment, the one decryption rule is one decryption algorithm.

As one embodiment, the one decryption rule is used for determining the target information block according to only the former of the first information block and the second identifier.

As one embodiment, the meaning of the encryption comprises: coding.

As one embodiment, the meaning of the encryption comprises: scrambling.

As one embodiment, the meaning of the decryption comprises: deciphering.

As one embodiment, the meaning of the decryption comprises: decoding.

As one embodiment, the meaning of the decryption comprises: determining.

As one embodiment, the meaning of the decryption comprises: recovery.

As one embodiment, the meaning of the decryption comprises: detection.

As one embodiment, the meaning of the decryption comprises: verification.

As one embodiment, the target information block is used for only the first node.

As one embodiment, the target information block is configured to the first node.

As one embodiment, the target information block is not used for other nodes.

As one embodiment, a recipient of the first message comprises at least one node, and the first node is one node in the at least one node; and the target information block is dedicated to the first node of the at least one node.

As one embodiment, the first message indicates at least one node, and the first node is one node in the at least one node; and the target information block is dedicated to the first node of the at least one node.

As one embodiment, the target information block is configured to the first node of the at least one node.

As one embodiment, the target information block is only used for the first node of the at least one node.

As one embodiment, the first message comprises the first information block.

As one embodiment, the first message comprises the first information block, and the first message does not comprise the target information block.

As one embodiment, any field other than the first information block in the first message does not comprise the target information block.

As one embodiment, at least one field in the first message is set to the first information block, and the first message does not comprise any field set to the target information block.

As one embodiment, the first information block is at least one field in the first message.

As one embodiment, the first information block is one field in the first message.

As one embodiment, the first information block is a plurality of fields in the first message.

As one embodiment, the first message does not comprise the second identifier.

As one embodiment, the first message does not carry the second identifier.

As one embodiment, the behavior of processing the first signal comprises: sending the first signal.

As one embodiment, the behavior of processing the first signal comprises: receiving the first signal.

As one sub-embodiment of this embodiment, the processing comprises monitoring.

As one sub-embodiment of this embodiment, the processing comprises detection.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in figures, the 5GS/EPS provides packet switching services, however, those skilled in the art will readily appreciate that the various concepts presented throughout the present application may be extended to networks providing circuit switching services or other cellular networks. RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF 214, an S-GW (Service Gateway)/UPF (User Plane Function) 212, and a P-GW (Packet Datea Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one base station (BS) device.

As one embodiment, the UE201 is one relay device.

As one embodiment, the node 203 corresponds to a second node in the present application.

As one embodiment, the node 203 is one base station device.

As one embodiment, the node 203 is user equipment.

As one embodiment, the node 203 is one relay device.

As one embodiment, the node 203 is a gateway.

As one embodiment, the user equipment supports transmission in a terrestrial network (TN).

As one embodiment, the user equipment supports transmission in a non-terrestrial network.

As one embodiment, the user equipment supports transmission in a large delay difference network.

As one embodiment, the user equipment supports dual connection (DC) transmission.

As one embodiment, the user equipment comprises a handheld terminal.

As one embodiment, the user equipment comprises a wearable device.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports low-latency and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a Node B (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device supports transmission in the non-terrestrial network.

As one embodiment, the base station device supports transmission in the large delay difference network.

As one embodiment, the base station device supports transmission in the terrestrial network.

As one embodiment, the base station device comprises a macro cellular base station.

As one embodiment, the base station device comprises a micro cell base station.

As one embodiment, the base station device comprises a pico cell base station.

As one embodiment, the base station device comprises a Femtocell.

As one embodiment, the base station device comprises a base station device supporting a large delay difference.

As one embodiment, the base station device comprises a flight platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises the test device.

As one embodiment, the base station device comprises the signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises user equipment.

As one embodiment, the relay device comprises the base station device.

### Embodiment 3

Embodiment 3 shows a schematic diagram of one embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows a radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301, and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for assigning various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the radio protocol architecture in FIG. 3 is applicable to a first node in the present application.

As one embodiment, the radio protocol architecture in FIG. 3 is applicable to a second node in the present application.

As one embodiment, a first Preamble in the present application is generated in the PHY301 or PHY351.

As one embodiment, a PDCCH identified by a first RNTI in the present application is generated in the PHY301 or PHY351.

As one embodiment, first DCI in the present application is generated in the PHY301 or PHY351.

As one embodiment, a first message in the present application is generated in an RRC306.

As one embodiment, a first signaling in the present application is generated in the RRC306.

As one embodiment, the first signaling in the present application is generated in an MAC302 or MAC352.

As one embodiment, the first signaling in the present application is generated in the PHY301 or PHY351.

As one embodiment, a second message in the present application is generated in the RRC306.

As one embodiment, the second message in the present application is generated in the MAC302 or MAC352.

As one embodiment, the second message in the present application is generated in the PHY301 or PHY351.

As one embodiment, a third message in the present application is generated in the RRC306.

As one embodiment, the third message in the present application is generated in the MAC302 or MAC352.

As one embodiment, the third message in the present application is generated in the PHY301 or PHY351.

As one embodiment, a first signal in the present application is generated in the RRC306.

As one embodiment, the first signal in the present application is generated in the MAC302 or MAC352.

As one embodiment, the first signal in the present application is generated in the PHY301 or PHY351.

As one embodiment, a first sub-message in the present application is generated in the RRC306.

As one embodiment, the first sub-message in the present application is generated in the MAC302 or MAC352.

As one embodiment, the first sub-message in the present application is generated in the PHY301 or PHY351.

As one embodiment, a second sub-message in the present application is generated in the RRC306.

As one embodiment, the second sub-message in the present application is generated in the MAC302 or MAC352.

As one embodiment, the second sub-message in the present application is generated in the PHY301 or PHY351.

### Embodiment 4

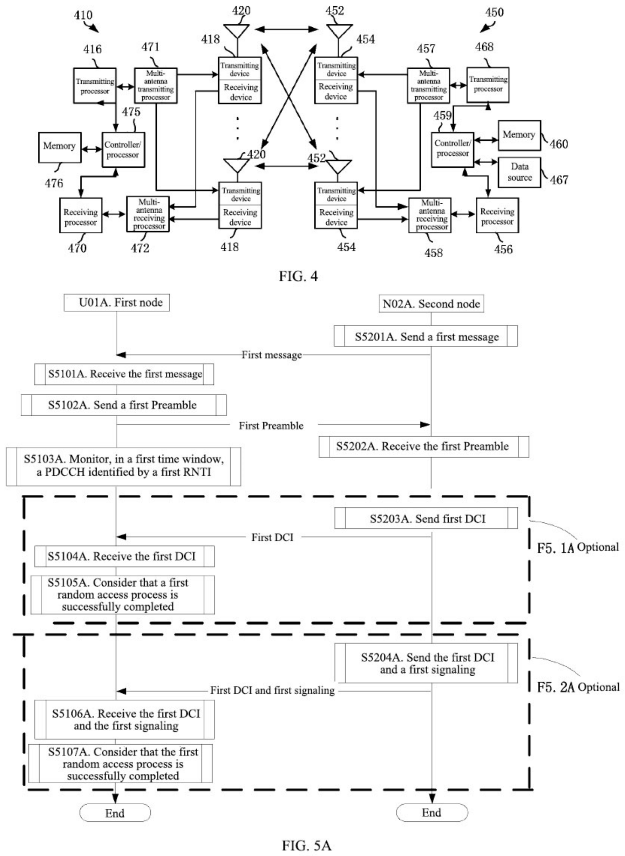

Embodiment 4 shows a schematic diagram of a first communication device and a second communication device according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource assignment to the first communication device 450 based on various priority metrics. The controller/processor 475 is also responsible for retransmission of lost packets, and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal clusters based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, and converts a radio frequency stream into a baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In a frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the sending function at the second communication device 410 as described in the transmission from the second communication device 410 to the first communication device 450, the controller/processor 459 implements header compression, encryption, packet segmentation and reordering, and multiplexing between logical and transport channels based on radio resource assignment, and implements the function of the L2 layer for the user plane and the control plane. The controller/processor 459 is also responsible for retransmission of lost packets, and signalings to the second communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, the transmitting processor 468 then modulates the generated spatial stream into a multi-carrier/single-carrier symbol stream, and after analog precoding/beamforming operations in the multi-antenna transmitting processor 457, the multi-carrier/single-carrier symbol stream is provided to different antennas 452 via the transmitting device 454. Each transmitting device 454 first converts a baseband symbol stream provided by the multi-antenna transmitting processor 457 into a radio frequency stream, which is then provided to different antennas 452.

In the transmission from the first communication device 450 to the second communication device 410, the function at the second communication device 410 is similar to the receiving function at the first communication device 450 as described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 may be provided to the core network.

As one embodiment, the first communication device 450 comprises: at least one processor and at least one memory, the at least one memory comprising a computer program code; the at least one memory and the computer program code are configured to be used together with the at least one processor; and the first communication device 450 at least: receives a first message, the first message comprising a first identifier, and the first identifier indicating a first node; after the first message is received, sends a first Preamble in a first random access process; and in response to a behavior of sending the first Preamble, monitors, in a first time window, a PDCCH identified by a first RNTI, wherein the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

As one embodiment, the first communication device 450 comprises: a memory that stores a computer-readable instruction program, the computer-readable instruction program generating actions when executed by at least one processor, the actions comprising: receiving the first message, the first message comprising the first identifier, and the first identifier indicating the first node; after the first message is received, sending the first Preamble in the first random access process; and in response to the behavior of sending the first Preamble, monitoring, in the first time window, the PDCCH identified by the first RNTI, wherein the first message is one RRC message, and the logical channel used for carrying the first message is the PCCH; the first message comprises the first information block; the air interface resource of the first Preamble depends on the first information block; and the air interface resource comprises at least one of the code domain resource, or the time domain resource, or the frequency domain resource.

As one embodiment, the second communication device 410 comprises: at least one processor and at least one memory, the at least one memory comprising a computer program code; and the at least one memory and the computer program code are configured to be used together with the at least one processor. The second communication device 410 at least: sends the first message, the first message comprising the first identifier, and the first identifier indicating the first node; after the first message is sent, receives the first Preamble in the first random access process; and in response to the behavior of receiving the first Preamble, sends the PDCCH identified by the first RNTI, wherein a sender of the first Preamble monitors, in the first time window, the PDCCH identified by the first RNTI; the first message is one RRC message, and the logical channel used for carrying the first message is the PCCH; the first message comprises the first information block; the air interface resource of the first Preamble depends on the first information block; and the air interface resource comprises at least one of the code domain resource, or the time domain resource, or the frequency domain resource.

As one embodiment, the second communication device 410 comprises: a memory that stores a computer-readable instruction program, the computer-readable instruction program generating actions when executed by at least one processor, the actions comprising: sending the first message, the first message comprising the first identifier, and the first identifier indicating the first node; after the first message is sent, receiving the first Preamble in the first random access process; and in response to the behavior of receiving the first Preamble, sending the PDCCH identified by the first RNTI, wherein the sender of the first Preamble monitoring, in the first time window, the PDCCH identified by the first RNTI; the first message is one RRC message, and the logical channel used for carrying the first message is the PCCH; the first message comprises the first information block; the air interface resource of the first Preamble depends on the first information block; and the air interface resource comprises at least one of the code domain resource, or the time domain resource, or the frequency domain resource.

As one embodiment, the first communication device 450 comprises: at least one processor and at least one memory, the at least one memory comprising a computer program code; the at least one memory and the computer program code are configured to be used together with the at least one processor; and the first communication device 450 at least: receives the first message, the first message being one RRC message, the first message being not transmitted through a dedicated logical channel, the first message comprising the first identifier, and the first identifier indicating the first node; and after the first message is received, processes a first signal, wherein the behavior of processing the first signal depends on a target information block, and at least the former of the first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, the first communication device 450 comprises: a memory that stores a computer-readable instruction program, the computer-readable instruction program generating actions when executed by at least one processor, the actions comprising: receiving the first message, the first message being one RRC message, the first message being not transmitted through the dedicated logical channel, the first message comprising the first identifier, and the first identifier indicating the first node; and after the first message is received, processing the first signal, wherein the behavior of processing the first signal depends on the target information block, and at least the former of the first information block and the second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, the second communication device 410 comprises: at least one processor and at least one memory, the at least one memory comprising a computer program code; and the at least one memory and the computer program code are configured to be used together with the at least one processor. The second communication device 410 at least: sends the first message, the first message being one RRC message, the first message being not transmitted through the dedicated logical channel, the first message comprising the first identifier, and the first identifier indicating the first node; and after the first message is sent, processes the first signal, wherein the behavior of processing the first signal depends on the target information block, and at least the former of the first information block and the second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, the second communication device 410 comprises: a memory that stores a computer-readable instruction program, the computer-readable instruction program generating actions when executed by at least one processor, the actions comprising: sending the first message, the first message being one RRC message, the first message being not transmitted through the dedicated logical channel, the first message comprising the first identifier, and the first identifier indicating the first node; and after the first message is sent, processing the first signal, wherein the behavior of processing the first signal depends on the target information block, and at least the former of the first information block and the second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, at least one of the antenna 452, the receiving device 454, the receiving processor 456, and the controller/processor 459 is used for receiving the first message.

As one embodiment, at least one of the antenna 420, the transmitting device 418, the transmitting processor 416, and the controller/processor 475 is used for sending the first message.

As one embodiment, at least one of the antenna 452, the receiving device 454, the receiving processor 456, and the controller/processor 459 is used for monitoring the PDCCH identified by the first RNTI.

As one embodiment, at least one of the antenna 420, the transmitting device 418, the transmitting processor 416, and the controller/processor 475 is used for monitoring the PDCCH identified by the first RNTI.

As one embodiment, at least one of the antenna 452, the receiving device 454, the receiving processor 456, and the controller/processor 459 is used for receiving a second message.

As one embodiment, at least one of the antenna 420, the transmitting device 418, the transmitting processor 416, and the controller/processor 475 is used for sending the second message.

As one embodiment, at least one of the antenna 452, the receiving device 454, the receiving processor 456, and the controller/processor 459 is used for receiving a third message.

As one embodiment, at least one of the antenna 420, the transmitting device 418, the transmitting processor 416, and the controller/processor 475 is used for sending the third message.

As one embodiment, at least one of the antenna 452, the receiving device 454, the receiving processor 456, and the controller/processor 459 is used for receiving first DCI.

As one embodiment, at least one of the antenna 420, the transmitting device 418, the transmitting processor 416, and the controller/processor 475 is used for sending the first DCI.

As one embodiment, at least one of the antenna 452, the receiving device 454, the receiving processor 456, and the controller/processor 459 is used for receiving a first signaling.

As one embodiment, at least one of the antenna 420, the transmitting device 418, the transmitting processor 416, and the controller/processor 475 is used for sending the first signaling.

As one embodiment, at least one of the antenna 452, the transmitting device 454, the transmitting processor 468, and the controller/processor 459 is used for sending the first Preamble.

As one embodiment, at least one of the antenna 420, the receiving device 418, the receiving processor 470, and the controller/processor 475 is used for receiving the first Preamble.

As one embodiment, at least one of the antenna 452, the receiving 454, the receiving processor 456, and the controller/processor 459 is used for receiving a first sub-message.

As one embodiment, at least one of the antenna 420, the transmitting 418, the transmitting processor 416, and the controller/processor 475 is used for sending the first sub-message.

As one embodiment, at least one of the antenna 452, the receiving device 454, the receiving processor 456, and the controller/processor 459 is used for receiving a second sub-message.

As one embodiment, at least one of the antenna 420, the transmitting 418, the transmitting processor 416, and the controller/processor 475 is used for sending the second sub-message.

As one embodiment, at least one of the antenna 452, the receiving device 454, the receiving processor 456, and the controller/processor 459 is used for receiving the first signal.

As one embodiment, at least one of the antenna 420, the transmitting device 418, the transmitting processor 416, and the controller/processor 475 is used for sending the first signal.

As one embodiment, at least one of the antenna 452, the transmitting device 454, the transmitting processor 468, and the controller/processor 459 is used for sending the first signal.

As one embodiment, at least one of the antenna 420, the receiving device 418, the receiving processor 470, and the controller/processor 475 is used for receiving the first signal.

As one embodiment, the first communication device 450 corresponds to the first node in the present application.

As one embodiment, the second communication device 410 corresponds to a second node in the present application.

As one embodiment, the first communication device 450 corresponds to the first node in the present application.

As one embodiment, the second communication device 410 corresponds to the second node in the present application.

As one embodiment, the first communication device 450 is one piece of user equipment.

As one embodiment, the first communication device 450 is one base station device.

As one embodiment, the second communication device 410 is one piece of user equipment.

As one embodiment, the second communication device 410 is one base station device.

### Embodiment 5A

Embodiment 5A illustrates a flowchart of radio signal transmission according to one embodiment of the present application, as shown in FIG. 5A. It is particularly noted that the order in this example does not limit the signal transmission order and implementation order in the present application.

For a **first node U01A,** in step S5101A, a first message is received, the first message comprising a first identifier; in step S5102A, after the first message is received, a first Preamble is sent in a first random access process; in step S5103A, in response to a behavior of sending the first Preamble, a PDCCH identified by a first RNTI is monitored in a first time window; in step S5104A, first DCI is received, the first DCI being identified by the first RNTI, and the first RNTI being one C-RNTI; in step S5105A, in response to the first DCI being received, the first random access process is considered to be successfully completed; in step S5106A, the first DCI and a first signaling are received, the first DCI being identified by the first RNTI, the first DCI being used for scheduling the first signaling, and the first signaling comprising at least a timing advance; and in step S5107A, in response to the first signaling being received, the first random access process is considered to be successfully completed.

For a **second node N02A,** in step S5201A, the first message is sent; in step S5202A, the first Preamble is received; in step S5203A, the first DCI is sent; and in step S5204A, the first DCI and the first signaling are sent.

In Embodiment 5A, the first message comprises a first information block; an air interface resource of the first Preamble depends on the first information block; and the air interface resource comprises at least one of a code domain resource, or a time domain resource, or a frequency domain resource.

As one embodiment, the first message is one RRC message, and a logical channel used for carrying the first message is a PCCH; and the first identifier indicates the first node U01A.

As one embodiment, the first message is one MAC signaling; and the first identifier indicates a first cell.

As one embodiment, this example does not limit whether a sender of the first message is the same as a recipient of the first Preamble in the present application.

As one embodiment, the meaning of a phrase "the first DCI being identified by the first RNTI" is: a CRC (Cyclic Redundancy Check) of the first DCI is scrambled by the first RNTI.

As one embodiment, the meaning of the phrase "the first DCI being identified by the first RNTI" is: the first DCI is addressed to the first RNTI.

As one embodiment, the meaning of the phrase "the first DCI being identified by the first RNTI" is: the first DCI is received on the PDCCH identified by the first RNTI.

As one embodiment, the meaning of the phrase "the first DCI being identified by the first RNTI" is: the first DCI is one PDCCH transmission.

As one embodiment, the meaning of the phrase "the first DCI being identified by the first RNTI" is: the first DCI is one piece of DCI identified by the first RNTI.

As one embodiment, the meaning of the phrase "the first DCI being identified by the first RNTI" is: the first DCI is one PDCCH transmission identified by the first RNTI.

As one embodiment, the phrase "random access process is considered to be successfully completed" refers to: consider this Random Access process successfully completed.

As one embodiment, a dotted box F5.1A is optional.

As one embodiment, the dotted box F5.1A exists.

As one embodiment, the dotted box F5.1A does not exist.

As one embodiment, a dotted box F5.2A is optional.

As one embodiment, the dotted box F5.2A exists.

As one embodiment, the dotted box F5.2A does not exist.

As one embodiment, the dotted box F5.1A and the dotted box F5.2A do not exist at the same time.

As one embodiment, the dotted box F5.1A and the dotted box F5.2A do not exist.

As one embodiment, the dotted box F5.1A exists and the dotted box F5.2A does not exist.

As one sub-embodiment of this embodiment, when the first DCI is received, the first time window is running.

As one sub-embodiment of this embodiment, only when the first node U01A is in uplink synchronization, in response to the first DCI being received, the first random access process is considered to be successfully completed.

As one subsidiary embodiment of this sub-embodiment, the phrase "the first node U01A is in uplink synchronization" comprises: one timer having a name that comprises a timeAlignmentTimer is running.

As one subsidiary embodiment of this sub-embodiment, the phrase "the first node U01A is in uplink synchronization" comprises: the timeAlignmentTimer of a TAG to which the first cell belongs is running.

As one subsidiary embodiment of this sub-embodiment, the phrase "the first node U01A is in uplink synchronization" comprises: a cg-SDT-TimeAlignmentTimer is running.

As one sub-embodiment of this embodiment, the behavior "in response to the first DCI being received, the first random access process is considered to be successfully completed" is unrelated to whether the first node U01A is in the uplink synchronization.

As one sub-embodiment of this embodiment, the first DCI is received on a first search space.

As one sub-embodiment of this embodiment, the first search space is one search space dedicated to SDT.

As one sub-embodiment of this embodiment, one RRC message is used for configuring the first search space.

As one sub-embodiment of this embodiment, a second message is used for configuring the first search space.

As one sub-embodiment of this embodiment, a third message is used for configuring the first search space.

As one sub-embodiment of this embodiment, the first DCI is not used for scheduling any one of a PDSCH or a PUSCH.

As one sub-embodiment of this embodiment, the first DCI is used for indicating the timing advance.

As one sub-embodiment of this embodiment, the first DCI comprises one Timing Advance Command field, and the one Timing Advance Command field indicates the timing advance.

As one sub-embodiment of this embodiment, the first DCI is used for scheduling the PDSCH.

As one subsidiary embodiment of this sub-embodiment, the first DCI is used for scheduling a DL-SCH.

As one subsidiary embodiment of this sub-embodiment, in response to the first DCI being received, the DCI is considered to have been toggled.

As one sub-embodiment of this embodiment, the first DCI is used for scheduling the PUSCH.

As one subsidiary embodiment of this sub-embodiment, the first DCI is used for scheduling a UL-SCH.

As one subsidiary embodiment of this sub-embodiment, in response to the first DCI being received, the DCI is considered to have been toggled.

As one subsidiary embodiment of this sub-embodiment, the first DCI is used for scheduling one UL grant for a new transmission.

As one sub-embodiment of this embodiment, the first DCI is used for scheduling any one of the PDSCH or the PUSCH.

As one sub-embodiment of this embodiment, the first DCI is used for scheduling the PDSCH and the PUSCH.

As one sub-embodiment of this embodiment, the first DCI is used for scheduling at least the timing advance.

As one sub-embodiment of this embodiment, the first DCI is used for determining that the random access process to which the first Preamble belongs is successfully completed.

As one sub-embodiment of this embodiment, when the first DCI is received, the first random access process is considered to be successfully completed.

As one sub-embodiment of this embodiment, the first RNTI is the C-RNTI of the first node U01A.

As one sub-embodiment of this embodiment, the first RNTI is the C-RNTI of the first node U01A in the first cell.

As one sub-embodiment of this embodiment, the first RNTI is the C-RNTI stored in a UE Inactive AS context of the first node U01A.

As one embodiment, the dotted box F5.1A does not exist, and the dotted box F5.2A exists.

As one sub-embodiment of this embodiment, when the first DCI is received, the first time window is running.

As one sub-embodiment of this embodiment, when the first signaling is received, the first time window is running.

As one sub-embodiment of this embodiment, when the first node U01A is not in the uplink synchronization, in response to the first signaling being received, the first random access process is considered to be successfully completed; and the first DCI is used for scheduling the first signaling.

As one subsidiary embodiment of this sub-embodiment, the phrase "the first node U01A is not in the uplink synchronization" comprises: one timer having a name that comprises the timeAlignmentTimer is not running.

As one subsidiary embodiment of this sub-embodiment, the phrase "the first node U01A is not in the uplink synchronization" comprises: the timeAlignmentTimer of the TAG to which the first cell belongs is not running.

As one subsidiary embodiment of this sub-embodiment, the phrase "the first node U01A is not in the uplink synchronization" comprises: the cg-SDT-TimeAlignmentTimer is not running.

As one sub-embodiment of this embodiment, the behavior "in response to the first DCI being received, the first random access process is considered to be successfully completed" is unrelated to whether the first node U01A is in the uplink synchronization.

As one sub-embodiment of this embodiment, any RRCResumeRequest message is not sent within a time interval from when the first Preamble is sent to when the first signaling is received.

As one sub-embodiment of this embodiment, any CCCH message is not sent within the time interval from when the first Preamble is sent to when the first signaling is received.

As one sub-embodiment of this embodiment, the first Preamble is used for indicating a request for performing data transmission in an RRC_INACTIVE state.

As one sub-embodiment of this embodiment, the first RNTI is one C-RNTI, and the first signaling comprises one Absolute Timing Advance MAC CE.

As one sub-embodiment of this embodiment, the first RNTI is one C-RNTI, and the first signaling comprises one MAC RAR.

As one sub-embodiment of this embodiment, the first RNTI is one C-RNTI, and the first signaling comprises one DTCH (Dedicated Traffic Channel) SDU (Service Data Unit).

As one sub-embodiment of this embodiment, the first RNTI is one RA-RNTI, and the first signaling comprises one MAC RAR.

As one sub-embodiment of this embodiment, the first signaling is a random access response for the first Preamble.

As one sub-embodiment of this embodiment, the first signaling is one random access response.

As one sub-embodiment of this embodiment, the first signaling is one random access response, the one random access response comprises one MAC subPDU, and the one MAC subPDU comprises a random access Preamble identifier of the first Preamble sent.

As one sub-embodiment of this embodiment, the first signaling is one MAC subPDU.

As one sub-embodiment of this embodiment, the first signaling is one random access response, and the one random access response comprises one MAC CE.

As one sub-embodiment of this embodiment, the meaning of "the first DCI is used for scheduling the first signaling" is: the PDSCH scheduled by the first DCI is used for carrying at least the first signaling.

As one sub-embodiment of this embodiment, the meaning of "the first DCI is used for scheduling the first signaling" is: the first DCI indicates scheduling information of the PDSCH carrying at least the first signaling.

As one sub-embodiment of this embodiment, the meaning of "the first DCI is used for scheduling the first signaling" is: the first DCI indicates downlink assignment of at least the first signaling.

As one sub-embodiment of this embodiment, a format of the first DCI is used for scheduling one DL-SCH.

As one sub-embodiment of this embodiment, the format of the first DCI is used for scheduling one PDSCH.

As one sub-embodiment of this embodiment, the format of the first DCI is used for scheduling the PDSCH and the PUSCH.

As one sub-embodiment of this embodiment, the format of the first DCI is used for scheduling a plurality of PDSCHs.

As one sub-embodiment of this embodiment, the format of the first DCI is DCI Format1_0.

As one sub-embodiment of this embodiment, the format of the first DCI is DCI Format1_1.

As one sub-embodiment of this embodiment, the format of the first DCI is DCI Format1_x, and x is an integer greater than 1.

As one sub-embodiment of this embodiment, the first DCI is used for scheduling only the first signaling.

As one sub-embodiment of this embodiment, the first DCI is used for scheduling the first signaling and at least one MAC SDU.

As one sub-embodiment of this embodiment, the first DCI is used for scheduling the first signaling and at least one DTCH SDU.

As one sub-embodiment of this embodiment, the first signaling is used for determining that the random access process to which the first Preamble belongs is successfully completed.

As one sub-embodiment of this embodiment, when the first signaling is received, the first random access process is considered to be successfully completed.

As one sub-embodiment of this embodiment, the first signaling comprises one MAC field, and the one MAC field indicates the timing advance.

As one sub-embodiment of this embodiment, the first signaling comprises one Timing Advance Command field, and the one Timing Advance Command field indicates the timing advance.

As one sub-embodiment of this embodiment, the MAC field indicating the timing advance in the first signaling occupies 12 bits.

As one sub-embodiment of this embodiment, the first signaling indicates only the timing advance.

As one auxiliary embodiment of this sub-embodiment, the first signaling comprises one MAC CE.

As one subsidiary embodiment of this sub-embodiment, the first signaling comprises one MAC subheader, the one MAC subheader comprises one eLCID field, and the one eLCID field indicates the Absolute Timing Advance MAC CE.

As one subsidiary embodiment of this sub-embodiment, the one eLCID field is set to 252.

As one subsidiary embodiment of this sub-embodiment, the first signaling comprises one Absolute Timing Advance MAC CE.

As one subsidiary embodiment of this embodiment, the first signaling indicates at least the timing advance and the uplink grant.

As one subsidiary embodiment of this sub-embodiment, the first signaling comprises a UL Grant field, and the one UL Grant field indicates the uplink grant.

As one auxiliary embodiment of this sub-embodiment, the first signaling comprises one MAC RAR.

As one subsidiary embodiment of this sub-embodiment, the first signaling comprises one fallbackRAR.

As one subsidiary embodiment of this sub-embodiment, the first signaling comprises one MAC subheader, the one MAC subheader comprises one RAPID field, and the random access preamble identifier comprised in the one RAPID field matches a PREAMBLE_INDEX of the first preamble.

### Embodiment 5B

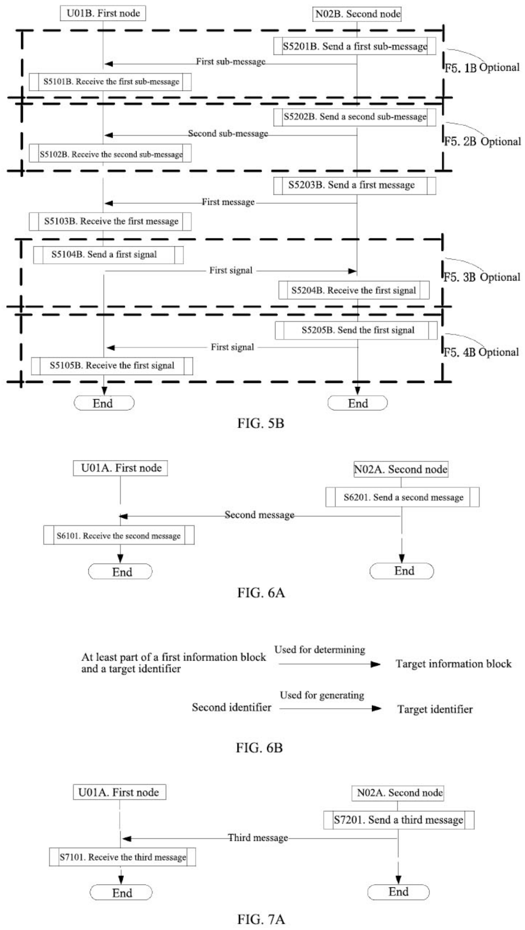

Embodiment 5B illustrates a flowchart of radio signal transmission according to one embodiment of the present application, as shown in FIG. 5B. It is particularly noted that the order in this example does not limit the signal transmission order and implementation order in the present application.

For **a first node U01B,** in step S5101B, a first sub-message is received; in step S5102B, a second sub-message is received; in step S5103B, a first message is received, the first message being one RRC message, the first message being not transmitted through a dedicated logical channel, the first message comprising a first identifier, and the first identifier indicating the first node U01B; in step S5104B, after the first message is received, a first signal is sent; and in step S5105B, after the first message is received, the first signal is received.

For **a second node N02B,** in step S5201B, the first sub-message is sent; in step S5202B, the second sub-message is sent; in step S5203B, the first message is sent; in step S5204B, the first signal is received; and in step S5205B, the first signal is sent.

In Embodiment 5B, a behavior of processing the first signal depends on a target information block, and at least the former of a first information block and a second identifier is used for determining the target information block; the target information block is dedicated to the first node U01B; the second identifier is used for the first node U01B, and the first identifier is different from the second identifier; the first message comprises only the former of the first information block and the target information block; and the processing comprises one of sending and receiving; the first sub-message comprises the first identifier; and the second sub-message comprises the second identifier.

As one embodiment, the first node U01B is one piece of user equipment.

As one embodiment, the first node U01B is one base station device.

As one embodiment, the first node U01B is one relay device.

As one embodiment, the second node N02B is one base station device.

As one embodiment, the second node N02B is one piece of user equipment.

As one embodiment, the second node N02B is one relay device.

As one embodiment, the first node U01B is one piece of user equipment, and the second node N02B is one base station device.

As one embodiment, the first node U01B is one piece of user equipment, and the second node N02B is one piece of user equipment.

As one embodiment, the first node U01B is one base station device, and the second node N02B is one base station device.

As one embodiment, a dotted box F5.1B is optional.

As one embodiment, the dotted box F5.1B exists.

As one embodiment, the dotted box F5.1B does not exist.

As one embodiment, a dotted box F5.2B is optional.

As one embodiment, the dotted box F5.2B exists.

As one embodiment, the dotted box F5.2B does not exist.

As one embodiment, the dotted box F5.1B and the dotted box F5.2B both exist.

As one embodiment, the dotted box F5.1B exists and the dotted box F5.2B does not exist.

As one embodiment, the dotted box F5.1B and the dotted box F5.2B do not exist.

As one embodiment, this example does not limit whether a sender of the first sub-message is the same as a sender of the second sub-message in the present application.

As one embodiment, this example does not limit whether the sender of the first sub-message is the same as the sender of the first message in the present application.

As one embodiment, the first sub-message is received before the first message is received.

As one embodiment, the second sub-message is received before the first message is received.

As one embodiment, the first sub-message is received before the second sub-message.

As one embodiment, the first sub-message is received after the second sub-message.

As one embodiment, the first sub-message is one RRC message and the second sub-message is one MAC signaling.

As one embodiment, the first sub-message and the second sub-message belong to the same RRC message.

As one embodiment, the first sub-message and the second sub-message belong to two different RRC messages.

As one embodiment, the first sub-message is a downlink message.

As one embodiment, the first sub-message is a sidelink message.

As one embodiment, the first sub-message assigns the first identifier to the first node U01B.

As one embodiment, the first sub-message is one MAC CE.

As one embodiment, the first sub-message comprises at least one MAC signaling.

As one embodiment, the first sub-message is one RRC message.

As one embodiment, the first sub-message is transmitted via a DCCH.

As one embodiment, the first sub-message is transmitted via an SRB1 (Signaling Radio Bearer 1).

As one embodiment, the first sub-message is transmitted via an SRB3 (Signaling Radio Bearer 3).

As one embodiment, the first sub-message is one RRCRelease message.

As one embodiment, the first sub-message is one RRCRelease message comprising a suspendConfig field, and the suspendConfig field comprises the first identifier.

As one embodiment, the second sub-message assigns the first identifier to the first node U01B.

As one embodiment, the second sub-message is the downlink message.

As one embodiment, the second sub-message is the sidelink message.

As one embodiment, the second sub-message is one MAC signaling.

As one embodiment, the second sub-message is one MAC signaling, and the second sub-message comprises one Timing Advance Command field, and the first identifier is set to a value of the one Timing Advance Command field.

As one embodiment, the second sub-message is one MAC signaling, the second sub-message comprises one C-RNTI field, and the first identifier is a value of the one C-RNTI field.

As one embodiment, the one MAC signaling is one MAC CE (Control Element).

As one embodiment, the one MAC signaling is one MAC RAR (Random Access Response).

As one embodiment, the one MAC signaling is one fallbackRAR.

As one embodiment, the one MAC signaling is one successfulRAR.

As one embodiment, the second sub-message is one RRC message.

As one embodiment, the second sub-message is one RRC message, the second sub-message comprises one newUE-Identity field, and the first identifier is a value of one newUE-Identity field.

As one embodiment, the second sub-message is transmitted via the DCCH.

As one embodiment, the second sub-message is transmitted via the SRB1.

As one embodiment, the second sub-message is transmitted via the SRB3.

As one embodiment, the second sub-message is one RRCRelease message.

As one embodiment, the second sub-message is one RRCRelease message comprising the suspendConfig field.

As one embodiment, the second sub-message is one RRCReconfiguration message.

As one embodiment, the second sub-message is one RRCReestablishment message.

As one embodiment, the second sub-message is one RRCSetup message.

As one embodiment, the first identifier is one fullI-RNTI and the second identifier is one shortI-RNTI.

As one embodiment, the first identifier is one fullI-RNTI and the second identifier is one C-RNTI.

As one embodiment, a dotted box F5.3B is optional.

As one embodiment, a dotted box F5.4B is optional.

As one embodiment, only one of the dotted box F5.3B and the dotted box F5.4B exists.

### Embodiment 6A

Embodiment 6A illustrates a flowchart of radio signal transmission according to another embodiment of the present application, as shown in FIG. 6A. It is particularly noted that the order in this example does not limit the signal transmission order and implementation order in the present application.

For **a first node U01A,** in step S6101, before a first message is received, a second message is received, the second message being used for determining to enter an RRC_INACTIVE state.

For **a second node N02A,** in step S6201, the second message is sent.

In Embodiment 6A, the second message comprises a first identifier; the first message indicates that the first node U01A performs data transmission in the RRC_INACTIVE state; and the first message is received in the RRC_INACTIVE state.

As one embodiment, the first message comprises the first identifier, and the first identifier indicates the first node U01A; and the first message is one RRC message, and a logical channel used for carrying the first message is a PCCH.

As one embodiment, in a first random access process, any CCCH (Common Control Channel) SDU is not sent.

As one embodiment, in a first RRC recovery process, any CCCH SDU is not sent.

As one embodiment, in the first RRC recovery process, one CCCH SDU is sent.

As one sub-embodiment of this embodiment, the one CCCH SDU comprises an RRCResumeRequest message.

As one sub-embodiment of this embodiment, the one CCCH SDU comprises an RRCResumeRequest1 message.

As one sub-embodiment of this embodiment, the one CCCH SDU is an MAC SDU corresponding to the RRCResumeRequest message.

As one sub-embodiment of this embodiment, the one CCCH SDU is the MAC SDU corresponding to the RRCResumeRequest1 message.

As one sub-embodiment of this embodiment, first DCI is used for scheduling one UL Grant, and the one UL Grant is used for sending the CCCH SDU.

As one embodiment, the first node U01A does not send any CCCH SDU within a time interval from when the second message is received to when the first message is received.

As one embodiment, the second message is received in an RRC_CONNECTED state.

As one embodiment, the second message is received in the RRC_INACTIVE state.

As one embodiment, the second message is received on a first cell.

As one embodiment, the second message is received on one cell other than the first cell.

As one embodiment, the second message is one RRCRelease message.

As one embodiment, the second message is one RRCRelease message comprising a suspendConfig field.

As one embodiment, the second message is the last RRC message received before the first message is received.

As one embodiment, the second message is the last RRC message that is received before the first message is received and is carried by an SRB1.

As one embodiment, the second message is the last RRCRelease message received before the first message is received.

As one embodiment, the second message is the last RRCRelease message that is received before the first message is received and comprises the SuspendConfig field.

As one embodiment, a behavior of entering the RRC_INACTIVE state comprises: maintaining in the RRC_INACTIVE state.

As one embodiment, the behavior of entering the RRC_INACTIVE state comprises: executing an action to enter the RRC_INACTIVE state.

As one embodiment, the second message indicates that the first node U01A enters the RRC_INACTIVE state.

As one embodiment, the suspendConfig field in the second message is used for determining to enter the RRC_INACTIVE state.

As one embodiment, the suspendConfig field in the second message indicates entering the RRC_INACTIVE state.

As one embodiment, in response to the second message being received, the first node U01A enters the RRC_INACTIVE state.

As one embodiment, the first node U01A is always in the RRC_INACTIVE state within the time interval from the behavior of entering the RRC_INACTIVE state to the first message being received.

As one embodiment, the second message comprises one RRC field having a name that comprises an sdt-Config.

As one embodiment, the second message does not comprise any RRC field having a name that comprises the sdt-Config.

As one embodiment, the second message comprises a ran-PagingCycle field.

As one embodiment, the second message comprises t380.

As one embodiment, the second message is used for configuring an RNA of the first node U01.

As one embodiment, the second message comprises a ran-NotificationAreaInfo field.

As one embodiment, the ran-NotificationAreaInfo field in the second message is used for configuring the RNA of the first node U01A.

As one embodiment, the second message is used for determining to store the first identifier.

As one embodiment, in response to the second message being received, the first identifier is stored.

As one embodiment, the first identifier is one bit string.

As one embodiment, the first identifier is one fullI-RNTI.

As one embodiment, the first identifier is one shortI-RNTI.

As one embodiment, the second message indicates the first identifier.

As one embodiment, one field in the second message comprises the first identifier.

As one embodiment, one RRC field other than the suspendConfig field in the second message comprises the first identifier.

As one embodiment, the suspendConfig field in the second message comprises the first identifier.

As one embodiment, a fullI-RNTI field in the second message comprises the first identifier.

As one embodiment, a shortI-RNTI field in the second message comprises the first identifier.

As one embodiment, the fullI-RNTI field in the suspendConfig field in the second message comprises the first identifier.

As one embodiment, the shortI-RNTI field in the suspendConfig field in the second message comprises the first identifier.

As one embodiment, the first message comprises a second field, and the second field is used for indicating that data transmission is performed in the RRC_INACTIVE state.

As one sub-embodiment of this embodiment, the second field is used for indicating that data transmission is performed through a DRB ((user) Data Radio Bearer) in the RRC_INACTIVE state.

As one sub-embodiment of this embodiment, the second field is used for indicating SDT.

As one sub-embodiment of this embodiment, the second field has a name that comprises at least one of sdt, or mt, or ul, or inactive.

As one sub-embodiment of this embodiment, the name of the second field is mt-sdt.

As one sub-embodiment of this embodiment, the second field has a name that comprises a pagingCause.

As one sub-embodiment of this embodiment, the name of the second field is pagingCause-r18.

As one sub-embodiment of this embodiment, the second field is set to a first value for indicating that data transmission is performed in the RRC_INACTIVE state.

As one sub-embodiment of this embodiment, the name of the first value is one character string.

As one sub-embodiment of this embodiment, the name of the first value is the mt-sdt.

As one sub-embodiment of this embodiment, the name of the first value is ul-sdt.

As one sub-embodiment of this embodiment, the name of the first value is sdt.

As one sub-embodiment of this embodiment, the name of the first value is ture.

As one embodiment, the second field is associated with a first field.

As one embodiment, the second field is for the first field.

As one embodiment, the second field depends on the first field.

As one embodiment, the second field is valid only for the first field.

As one embodiment, the second field is configured to a PagingRecord field comprising the first field in the first message.

As one embodiment, the second field belongs to the PagingRecord field comprising the first field in the first message.

As one embodiment, the second field is associated with the PagingRecord field comprising the first field in the first message.

As one embodiment, the second field is configured to the RRC field in the first message that comprises the first field and has a name that comprises a PagingRecord.

As one embodiment, the second field belongs to the RRC field in the first message that comprises the first field and has a name that comprises the PagingRecord.

As one embodiment, the second field is associated with the RRC field in the first message that comprises the first field and has a name that comprises the PagingRecord.

As one embodiment, the first field and the second field belong to the same RRC field.

As one sub-embodiment of this embodiment, the first field and the second field are two fields in the same RRC field.

As one sub-embodiment of this embodiment, the same RRC field is one PagingRecord field.

As one sub-embodiment of this embodiment, the same RRC field is one PagingRecord-v1800 field.

As one sub-embodiment of this embodiment, the same RRC field is one PagingRecord-r18 field.

As one sub-embodiment of this embodiment, the same RRC field has a name that comprises the PagingRecord, and the same RRC field has a name that does not comprises a List.

As one embodiment, the first message comprises one PagingRecordList, and the one PagingRecordList comprises the first field; the first message comprises one PagingRecordList-v1800, and the one PagingRecordList-v1800 comprises the second field; and an entry number of the second field in the one PagingRecordList-v1800 is the same as that of the first field in the one PagingRecordList.

As one sub-embodiment of this embodiment, the first field belongs to one entry in the one PagingRecordList.

As one sub-embodiment of this embodiment, the first field belongs to one PagingRecord in the one PagingRecordList.

As one sub-embodiment of this embodiment, the second field belongs to one entry in the one PagingRecordList-v1800.

As one sub-embodiment of this embodiment, the second field belongs to one PagingRecord-v1800 in the one PagingRecordList-v1800.

As one embodiment, the first message comprises one PagingRecordList, and the one PagingRecordList comprises the first field; the first message comprises one PagingRecordList-v1700, and the one PagingRecordList-v1700 comprises the second field; and the entry number of the second field in the one PagingRecordList-v1700 is the same as that of the first field in the one PagingRecordList.

As one sub-embodiment of this embodiment, the first field belongs to one entry in the one PagingRecordList.

As one sub-embodiment of this embodiment, the first field belongs to one PagingRecord in the one PagingRecordList.

As one sub-embodiment of this embodiment, the second field belongs to one entry in the one PagingRecordList-v1700.

As one sub-embodiment of this embodiment, the second field belongs to one PagingRecord-v1700 in the one PagingRecordList-v1700.

As one embodiment, the first message is a Paging message.

As one embodiment, the first message comprises one PagingRecord, and the one PagingRecord comprises the first identifier.

As one embodiment, the first message comprises one RRC field having a name that comprises the PagingRecord, and the one RRC field having the name that comprises the PagingRecord comprises the first identifier.

As one embodiment, the meaning of the phrase "data transmission is performed in the RRC_INACTIVE state" is: performing data transmission through at least the DRB in the RRC_INACTIVE state.

As one embodiment, the meaning of the phrase "data transmission is performed in the RRC_INACTIVE state" is: performing data transmission through at least the DRB and an SRB2 in the RRC_INACTIVE state.

As one embodiment, the meaning of the phrase "data transmission is performed in the RRC_INACTIVE state" is: executing an SDT procedure.

As one embodiment, the first RRC recovery process comprises: performing data transmission in the RRC_INACTIVE state.

As one embodiment, the first RRC recovery process is: performing data transmission in the RRC_INACTIVE state.

As one embodiment, the first RRC recovery process is to perform data transmission in the RRC_INACTIVE state.

As one embodiment, the first message is used for triggering the first RRC recovery process, and the first random access process is initiated in the first RRC recovery process.

As one embodiment, the first RRC recovery process is used for the SDT.

As one embodiment, the first RRC recovery process is one RRC recovery process for SDT.

As one embodiment, the first RRC recovery process is one SDT procedure.

As one embodiment, the SDT is MT-SDT.

As one embodiment, the SDT is MO-SDT.

As one embodiment, the SDT comprises at least one of the MO-SDT or the MT-SDT.

As one embodiment, when the first node U01A is in the RRC_INACTIVE state, the first message is received.

As one embodiment, when the first message is received, the first node U01A is in the RRC_INACTIVE state.

As one embodiment, the latter or the former of a third message and the second message is received.

### Embodiment 6B

Embodiment 6B illustrates a schematic diagram of at least part of a first information block and a target identifier being used for determining a target information block according to one embodiment of the present application.

In Embodiment 6B, at least part of the first information block and the target identifier are used for determining the target information block, and a second identifier is used for generating the target identifier.

As one embodiment, part of the first information block and the target identifier are used for determining the target information block.

As one embodiment, all of the first information block and the target identifier are used for determining the target information block.

As one embodiment, at least part of the first information block is decrypted by the target identifier to determine the target information block.

As one embodiment, at least part of the first information block is processed by the target identifier to obtain the target information block.

As one embodiment, the second identifier is used for determining the target identifier.

As one embodiment, the second identifier is used for obtaining the target identifier.

As one embodiment, part of the second identifier is used for generating the target identifier.

As one embodiment, all of the second identifier is used for generating the target identifier.

As one embodiment, the target identifier is the second identifier.

As one embodiment, the target identifier is not the second identifier.

As one embodiment, a length of the target identifier is not equal to that of the target information block.

As one embodiment, the length of the target identifier is equal to that of the target information block.

As one embodiment, the target identifier is part of the second identifier.

As one embodiment, the target identifier consists of all of K1 second identifiers, and K1 is a positive integer.

As one embodiment, the target identifier consists of part of K1 second identifiers, and K1 is a positive integer.

As one embodiment, K1 is configurable.

As one embodiment, K1 is pre-configured.

As one embodiment, K1 is equal to 1.

As one embodiment, K1 is greater than 1.

### Embodiment 7A

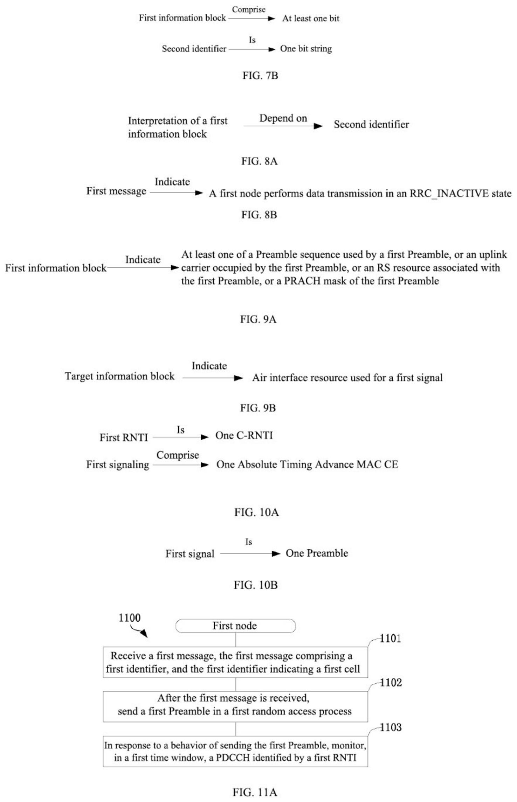

Embodiment 7A illustrates a flowchart of radio signal transmission according to yet another embodiment of the present application, as shown in FIG. 7A. It is particularly noted that the order in this example does not limit the signal transmission order and implementation order in the present application.

For **a first node U01A,** in step S7101, a third message is received, and the third message is used for determining at least one PRACH configuration.

For **a second node N02A,** in step S7201, the third message is sent.

In Embodiment 7, a first information block indicates a first PRACH configuration in the at least one PRACH configuration; and the first PRACH configuration is used for determining an air interface resource of a first Preamble.

As one embodiment, the third message is received before a first message is received.

As one embodiment, the third message is one MAC signaling.

As one embodiment, the third message is one MAC CE.

As one embodiment, the third message is one MAC subheader.

As one embodiment, the third message is one RRC message.

As one embodiment, the third message indicates the at least one PRACH configuration.

As one embodiment, the third message comprises the at least one PRACH configuration.

As one embodiment, the third message is a second message.

As one sub-embodiment of this embodiment, at least one field in the second message is used for determining the at least one PRACH configuration.

As one sub-embodiment of this embodiment, a suspendConfig field in the second message is used for determining the at least one PRACH configuration.

As one embodiment, the third message is not the second message.

As one sub-embodiment of this embodiment, the third message and the second message belong to the same RRC message.

As one sub-embodiment of this embodiment, the third message and the second message do not belong to the same RRC message.

As one sub-embodiment of this embodiment, the third message is one public signaling.

As one sub-embodiment of this embodiment, the third message is one SIB1 message.

As one sub-embodiment of this embodiment, the third message is one SystemInformation message.

As one sub-embodiment of this embodiment, the third message is one System Information Block (SIB).

As one sub-embodiment of this embodiment, a logical channel used for carrying the third message is a BCCH (Broadcast Control Channel).

As one sub-embodiment of this embodiment, the third message is one dedicated signaling.

As one sub-embodiment of this embodiment, the third message is one RRCReconfiguration message.

As one sub-embodiment of this embodiment, the logical channel used for carrying the third message is a DCCH (Dedicated Control Channel).

As one embodiment, the third message comprises at least one RACH-ConfigDedicated IE.

As one embodiment, the third message comprises at least one RACH-ConfigGeneric IE.

As one embodiment, the at least one PRACH configuration is configured to SDT.

As one embodiment, the at least one PRACH configuration is configured to a CFRA.

As one embodiment, the at least one PRACH configuration is used for conditional CFRA.

As one embodiment, the at least one PRACH configuration is used for the CFRA, and the CFRA is triggered by a downlink signaling.

As one embodiment, the at least one PRACH configuration is used for the CFRA, the CFRA is triggered by the downlink signaling, and the downlink signaling comprises the first message.

As one embodiment, the at least one PRACH configuration is used for the CFRA, the CFRA is triggered by the downlink signaling, and the downlink signaling comprises a second field in the first message.

As one embodiment, each of the at least one PRACH configuration comprises one ra-PreambleIndex field, and the one ra-PreambleIndex field indicates one Preamble.

As one embodiment, each of the at least one PRACH configuration comprises one ssb field, and the one ssb field indicates one SSB (Synchronization Signal Block).

As one embodiment, each of the at least one PRACH configuration comprises one ssb field, and the one ssb field indicates one SSB (Synchronization Signal Block).

As one embodiment, the SSB is a Synchronization Signal Block.

As one embodiment, the SSB is a Synchronization Signal/physical broadcast channel Block.

As one embodiment, each of the at least one PRACH configuration comprises one csi-RS field, and the one csi-RS field indicates one CSI (Channel State Information)-RS (Reference Signal).

As one embodiment, each of the at least one PRACH configuration comprises one of one ssb field or one csi-RS field, the one ssb field indicates one SSB, and the one csi-RS field indicates one CSI-RS.

As one embodiment, if one PRACH configuration comprises one csi-RS field, the PRACH configuration comprises one ra-OccasionList field.

As one embodiment, one field in the first information block indicates a first index.

As one embodiment, a value of one field in the first information block is set to the first index.

As one embodiment, the first information block indicates the first index, and the first index indicates the first PRACH configuration in the at least one PRACH configuration.

As one sub-embodiment of this embodiment, the first index is an identifier of the first PRACH configuration in the at least one PRACH configuration.

As one sub-embodiment of this embodiment, the first index is the order of the first PRACH configuration in the at least one PRACH configuration.

As one sub-embodiment of this embodiment, the first index indicates a position of the first PRACH configuration in the at least one PRACH configuration.

As one sub-embodiment of this embodiment, each of the at least one PRACH configuration is configured with one index, and the first index is an index of the first PRACH configuration.

As one sub-embodiment of this embodiment, the first index is one positive integer.

As one sub-embodiment of this embodiment, the first index is one non-negative integer.

As one sub-embodiment of this embodiment, the maximum value of a candidate of the first index is pre-defined.

As one sub-embodiment of this embodiment, the maximum value of the candidate of the first index is configurable.

As one embodiment, the air interface resource of the first Preamble is determined according to the first PRACH configuration.

As one embodiment, the air interface resource of the first Preamble is indicated by the first PRACH configuration.

As one embodiment, the third message is received before the second message.

As one embodiment, the third message is received after the second message.

As one embodiment, both the third message and the second message are received.

As one embodiment, only the former of the third message and the second message is received.

### Embodiment 7B

Embodiment 7B illustrates a schematic diagram of a second identifier being one bit string according to one embodiment of the present application.

In Embodiment 7B, a first information block comprises at least one bit; and the second identifier is one bit string.

As one embodiment, the first information block comprises at least one bit string.

As one embodiment, each field in the first information block comprises at least one bit.

As one embodiment, each field in the first information block is set to one bit string.

As one embodiment, the first information block is identified by a target identifier.

As one embodiment, the first information block is scrambled by the target identifier.

As one embodiment, the first information block is encrypted by the target identifier.

As one embodiment, the first information block is encoded by the target identifier.

As one embodiment, at least part of bits in the first information block and the target identifier are used for determining a target information block, and the second identifier is used for generating the target identifier.

As one embodiment, at least part of bits in the first information block and the target identifier are input into one function to obtain the target information block.

As one embodiment, "at least part of bits in the target information block" refers to: all bits in the target information block.

As one embodiment, "at least part of bits in the target information block" refers to: part of bits in the target information block.

As one embodiment, a length of the target identifier is not equal to that of the target information block.

As one embodiment, the length of the target identifier is equal to that of the target information block.

As one embodiment, the target identifier is the second identifier.

As one embodiment, the target identifier is part of bits in the second identifier.

As one embodiment, the target identifier is not the second identifier, and the second identifier is used for generating the target identifier.

As one embodiment, the target identifier comprises K1 second identifiers, and K1 is a positive integer.

As one embodiment, the target identifier consists of all bits in K1 second identifiers, and K1 is a positive integer.

As one embodiment, the target identifier consists of part of bits in K1 second identifiers, and K1 is a positive integer.

As one embodiment, K1 is equal to 1.

As one embodiment, K1 is greater than 1.

As one embodiment, the length of the second identifier is fixed.

As one embodiment, the length of the second identifier is variable.

As one embodiment, the number of bits of the second identifier is not equal to that of a first identifier.

As one embodiment, the number of bits of the second identifier is equal to that of the first identifier.

### Embodiment 8A

Embodiment 8A illustrates a schematic diagram of an interpretation of a first information block depending on a second identifier according to one embodiment of the present application.

In Embodiment 8A, the interpretation of the first information block depends on the second identifier, the second identifier is used for a first node, and a first identifier is different from the second identifier.

As one embodiment, a first message does not comprise the second identifier.

As one embodiment, the first message comprises the first identifier, and the first identifier indicates the first node; and the first message is one RRC message, and a logical channel used for carrying the first message is a PCCH.

As one embodiment, the meaning of the phrase "an interpretation of a first information block depends on a second identifier" is: the interpretation of the first information block depends on only the second identifier.

As one embodiment, the meaning of the phrase "an interpretation of a first information block depends on a second identifier" is: the interpretation of the first information block depends on at least the second identifier.

As one embodiment, the meaning of the phrase "an interpretation of a first information block depends on a second identifier" is: the first information block comprises a plurality of fields, and the interpretation of each of the plurality of fields depends on the second identifier.

As one embodiment, the meaning of the phrase "an interpretation of a first information block depends on a second identifier" is: the first information block comprises a plurality of fields, and the interpretation of only part of the plurality of fields depends on the second identifier.

As one embodiment, the meaning of the phrase "an interpretation of a first information block depends on a second identifier" is: the first information block comprises only one field, and the interpretation of the only one field depends on the second identifier.

As one embodiment, the meaning of the phrase "an interpretation of a first information block depends on a second identifier" is: a true value of the first information block depends on the second identifier.

As one embodiment, the meaning of the phrase "an interpretation of a first information block depends on a second identifier" is: the meaning of the first information block depends on the second identifier.

As one embodiment, the meaning of the phrase "an interpretation of a first information block depends on a second identifier" is: information indicated by the first information block depends on the second identifier.

As one embodiment, the meaning of the interpretation comprises deciphering.

As one embodiment, the meaning of the interpretation comprises decoding.

As one embodiment, the meaning of the interpretation comprises decryption.

As one embodiment, the meaning of the interpretation comprises determination.

As one embodiment, the meaning of the interpretation comprises recovery.

As one embodiment, the meaning of the interpretation comprises detection.

As one embodiment, the first information block is identified by a target bit string.

As one embodiment, the first information block is scrambled by the target bit string.

As one embodiment, the first information block is encrypted by the target bit string.

As one embodiment, the first information block is encoded by the target bit string.

As one embodiment, at least part of bits in the first information block and the target bit string are used for determining a target information block.

As one embodiment, at least part of bits in the first information block and the second identifier are processed to obtain the target information block.

As one embodiment, at least part of bits in the first information block and the target bit string are input into one function to obtain the target information block.

As one embodiment, at least part of bits in the first information block and the target bit string are subjected to a first operation to obtain the target information block, and an air interface resource of a first Preamble depends on the target information block.

As one embodiment, the first operation is executed by the first node.

As one embodiment, at least part of bits in the target information block and the target bit string are subjected to a second operation to obtain the first information block, and the second operation is an inverse operation of the first operation.

As one embodiment, the second operation is executed by a second node.

As one embodiment, "at least part of bits in the target information block" refers to: all bits in the target information block.

As one embodiment, "at least part of bits in the target information block" refers to: part of bits in the target information block.

As one embodiment, the first operation comprises: linear operation.

As one embodiment, the first operation comprises: nonlinear operation.

As one embodiment, the first operation comprises: logical operation.

As one embodiment, the first operation comprises: Boolean operation.

As one embodiment, the first operation comprises: bit operation.

As one embodiment, the first operation comprises: XOR.

As one embodiment, the first operation comprises: AND-OR.

As one embodiment, the first operation comprises: XNOR.

As one embodiment, the first operation comprises: AND.

As one embodiment, the first operation comprises: OR.

As one embodiment, the first operation comprises: NOT.

As one embodiment, the first operation comprises: AND-NOT.

As one embodiment, the first operation comprises: CRC.

As one embodiment, the first operation is: linear operation.

As one embodiment, the first operation is: nonlinear operation.

As one embodiment, the first operation is: logical operation.

As one embodiment, the first operation is: Boolean operation.

As one embodiment, the first operation is: bit operation.

As one embodiment, the first operation is: XOR.

As one embodiment, the first operation is: AND-OR.

As one embodiment, the first operation is: XNOR.

As one embodiment, the first operation is: AND.

As one embodiment, the first operation is: OR.

As one embodiment, the first operation is: NOT.

As one embodiment, the first operation is: AND-NOT.

As one embodiment, the first operation is: CRC.

As one embodiment, a length of the target bit string is not equal to that of the target information block.

As one embodiment, the length of the target bit string is equal to that of the target information block.

As one embodiment, the target bit string is the second identifier.

As one embodiment, the target bit string is part of bits in the second identifier.

As one embodiment, the target bit string is not the second identifier, and the second identifier is used for generating the target bit string.

As one embodiment, the target bit string comprises K1 second identifiers, and K1 is a positive integer.

As one embodiment, the target bit string consists of all bits in K1 second identifiers, and K1 is a positive integer.

As one embodiment, the target bit string consists of part of bits in K1 second identifiers, and K1 is a positive integer.

As one embodiment, K1 is equal to 1.

As one embodiment, K1 is greater than 1.

As one embodiment, the second identifier is pre-configured.

As one embodiment, the second identifier is assigned by the second node.

As one embodiment, the second identifier is configured by a second message in the present application.

As one embodiment, the second identifier is stored by the first node.

As one embodiment, the second identifier is calculated by the first node.

As one embodiment, the length of the second identifier is fixed.

As one embodiment, the length of the second identifier is variable.

As one embodiment, the second identifier is one bit string.

As one embodiment, the second identifier is assigned to the first node.

As one embodiment, the second identifier is configured to the first node by the RRC message.

As one embodiment, the second identifier indicates the second node.

As one embodiment, the second identifier indicates the first node in a first cell.

As one embodiment, the second identifier indicates the first node in at least one cell.

As one embodiment, the second identifier indicates the first node in a designated cell.

As one embodiment, the second identifier indicates the first node in an RNA of the first node.

As one embodiment, the second identifier is one shortI-RNTI of the first node.

As one embodiment, the second identifier is one shortI-RNTI stored by the first node.

As one embodiment, the second identifier is one C-RNTI of the first node.

As one embodiment, the second identifier is the C-RNTI stored by the first node.

As one embodiment, the second identifier is the C-RNTI of the first node in the first cell.

As one embodiment, the second identifier is not the first identifier.

As one embodiment, the name of the second identifier is different from the name of the first identifier.

As one embodiment, the number of bits of the second identifier is not equal to that of the first identifier.

As one embodiment, the number of bits of the second identifier is equal to that of the first identifier.

As one embodiment, it is assumed that the first information block is (101110) (0)

(011111) (1111), the target bit string is (001010) (1) (011011) (0010), and the target information block obtained after all bits in the first information block and the target bit string are subjected to the first operation is (100100) (1) (000100) (1101), wherein the first information block comprises a first target field (101110), a second target field (0), a third target field (011111) and a fourth target field (1111); the first operation is XOR; and the target bit string is part of bits in the second identifier, and the second identifier is one shortI-RNTI of the first node.

As one embodiment, it is assumed that the first information block is (101110)

(011111) (1111) 0, the target bit string is (001010) (011011) (0010), and the target information block obtained after part of bits (101110) (011111) (1111) in the first information block and a target bit string are subjected to the first operation is (100100) (000100) (1101) 0, wherein the first information block comprises the first target field (101110), the second target field (0), the third target field (011111) and the fourth target field (1111); the first operation is XOR; and the target bit string is the second identifier, and the second identifier is one C-RNTI of the first node.

### Embodiment 8B

Embodiment 8B illustrates a schematic diagram of a first message indicating that a first node performs data transmission in an RRC_INACTIVE state according to one embodiment of the present application.

In Embodiment 8B, a first sub-message is used for determining to enter the RRC_INACTIVE state; a logical channel used for carrying the first message is a PCCH; and the first message indicates that the first node performs data transmission in the RRC_INACTIVE state.

As one embodiment, the first sub-message is used for determining to store a first identifier.

As one embodiment, in response to the first sub-message being received, the first identifier is stored.

As one embodiment, the first sub-message is received in an RRC_CONNECTED state.

As one embodiment, the first sub-message is received in an RRC_INACTIVE state.

As one embodiment, the first sub-message is received on a first cell.

As one embodiment, the first sub-message is received on one cell other than the first cell.

As one embodiment, the first sub-message is one RRC message.

As one embodiment, the first sub-message is one RRCRelease message.

As one embodiment, the first sub-message is one RRCRelease message comprising a suspendConfig field.

As one embodiment, the first sub-message is the last RRCRelease message received before the first message is received.

As one embodiment, the first sub-message is the last RRCRelease message that is received before the first message is received and comprises the SuspendConfig field.

As one embodiment, the first sub-message comprises an RRC field that has a name that comprises a sdt-Config.

As one embodiment, the first sub-message does not comprise any RRC field that has a name comprises the sdt-Config.

As one embodiment, the first sub-message comprises a ran-PagingCycle field.

As one embodiment, the first sub-message comprises t380.

As one embodiment, the first sub-message is used for configuring an RNA of a first node U01.

As one embodiment, the first sub-message comprises a ran-NotificationAreaInfo field.

As one embodiment, the ran-NotificationArealnfo field in the first sub-message is used for configuring the RNA of the first node U01.

As one embodiment, the first sub-message indicates the first identifier.

As one embodiment, one field in the first sub-message comprises the first identifier.

As one embodiment, one RRC field other than the suspendConfig field in the first sub-message comprises the first identifier.

As one embodiment, the suspendConfig field in the first sub-message comprises the first identifier.

As one embodiment, a fullI-RNTI field in the first sub-message comprises the first identifier.

As one embodiment, a shortI-RNTI field in the first sub-message comprises the first identifier.

As one embodiment, the fullI-RNTI field in the suspendConfig field in the first message comprises the first identifier.

As one embodiment, the shortI-RNTI field in the suspendConfig field in the first sub-message comprises the first identifier.

As one embodiment, the first identifier is one bit string.

As one embodiment, the first identifier is one fullI-RNTI.

As one embodiment, the first identifier is one shortI-RNTI.

As one embodiment, a behavior of entering the RRC_INACTIVE state comprises: maintaining in the RRC_INACTIVE state.

As one embodiment, "a behavior of entering the RRC_INACTIVE state" comprises: executing an action to enter the RRC_INACTIVE state.

As one embodiment, the first sub-message indicates that the first node U01 enters the RRC_INACTIVE state.

As one embodiment, the suspendConfig field in the first sub-message is used for determining to enter the RRC_INACTIVE state.

As one embodiment, the suspendConfig field in the first sub-message indicates entering the RRC_INACTIVE state.

As one embodiment, in response to the first sub-message being received, the first node enters the RRC_INACTIVE state.

As one embodiment, the first node U01 is always in the RRC_INACTIVE state within a time interval from the behavior of entering the RRC_INACTIVE state to the first message being received.

As one embodiment, the first message is one Paging message.

As one embodiment, the first message comprises at least one PagingRecord field.

As one embodiment, the first message comprises at least one field having a name that comprises a PagingRecord.

As one embodiment, the first message comprises at least one PagingRecordList.

As one embodiment, the first message comprises at least one field having a name that comprises a PagingRecordList.

As one embodiment, the first message comprises one PagingRecord field, and the one PagingRecord field comprises the first identifier.

As one embodiment, the first message comprises one RRC field having a name that comprises the PagingRecord, and the one RRC field having the name that comprises the PagingRecord comprises the first identifier.

As one embodiment, the meaning of a phrase "performs data transmission in the

RRC_INACTIVE state" is: performing data transmission in the RRC_INACTIVE state through at least a DRB ((user) Data Radio Bearer).

As one embodiment, the meaning of the phrase "performs data transmission in the RRC_INACTIVE state" is: performing data transmission in the RRC_INACTIVE state through at least the DRB and an SRB2 (Signaling Radio Bearer 2).

As one embodiment, the meaning of the phrase "performs data transmission in the RRC_INACTIVE state" is: executing an SDT procedure.

As one embodiment, the first message comprises a first field and a second field, and the first field and the second field indicate that the first node performs data transmission in the RRC_INACTIVE state.

As one embodiment, the first message comprises the first field and the second field, and the first field and the second field are used together for indicating that the first node performs data transmission in the RRC_INACTIVE state.

As one embodiment, the first message comprises the first field and the second field, and a value of the first field and a value of the second field indicate that the first node performs data transmission in the RRC_INACTIVE state.

As one embodiment, the first message comprises the first field and the second field, the first field comprises the first identifier, and the second field is used for indicating that data transmission is performed in the RRC_INACTIVE state.

As one sub-embodiment of this embodiment, the first message comprises one PagingRecord field, and the one PagingRecord field comprises the first field, and the first field comprises the first identifier.

As one sub-embodiment of this embodiment, the first message comprises one RRC field having a name that comprises the PagingRecord, the one RRC field having the name that comprises the PagingRecord comprises the first field, and the first field comprises the first identifier.

As one embodiment, the first message comprises the first field, and the first field comprises the first identifier.

As one sub-embodiment of this embodiment, the first field is one ue-Identity field.

As one sub-embodiment of this embodiment, the first field is one PagingUE-Identity field.

As one sub-embodiment of this embodiment, the first field is one fullI-RNTI field.

As one sub-embodiment of this embodiment, the first field is one I-RNTI-Value field.

As one embodiment, the first message comprises the second field, and the second field is used for indicating that data transmission is performed in the RRC_INACTIVE state.

As one sub-embodiment of this embodiment, the second field is used for indicating SDT.

As one sub-embodiment of this embodiment, the second field has a name that comprises at least one of sdt, or mt, or ul, or inactive.

As one sub-embodiment of this embodiment, the name of the second field is mt-sdt.

As one sub-embodiment of this embodiment, the second field has a name that comprises a pagingCause.

As one sub-embodiment of this embodiment, the name of the second field is pagingCause-r18.

As one sub-embodiment of this embodiment, the second field is set to a first value for indicating that data transmission is performed in the RRC_INACTIVE state.

As one sub-embodiment of this embodiment, the name of the first value is one character string.

As one sub-embodiment of this embodiment, the name of the first value is mt-sdt.

As one sub-embodiment of this embodiment, the name of the first value is ul-sdt.

As one sub-embodiment of this embodiment, the name of the first value is sdt.

As one sub-embodiment of this embodiment, the name of the first value is ture.

As one embodiment, the second field is associated with the first field.

As one embodiment, the second field is for the first field.

As one embodiment, the second field depends on the first field.

As one embodiment, the second field is valid only for the first field.

As one embodiment, the second field is configured to the PagingRecord field comprising the first field in the first message.

As one embodiment, the second field belongs to the PagingRecord field comprising the first field in the first message.

As one embodiment, the second field is associated with the PagingRecord field comprising the first field in the first message.

As one embodiment, the second field is configured to the RRC field in the first message that comprises the first field and has a name that comprises the PagingRecord.

As one embodiment, the second field belongs to the RRC field in the first message that comprises the first field and has a name that comprises the PagingRecord.

As one embodiment, the second field is associated with the RRC field in the first message that comprises the first field and has a name that comprises the PagingRecord.

As one embodiment, the first field and the second field belong to the same RRC field.

As one sub-embodiment of this embodiment, the first field and the second field are two fields in the same RRC field.

As one sub-embodiment of this embodiment, the same RRC field is one PagingRecord field.

As one sub-embodiment of this embodiment, the same RRC field is one PagingRecord-v1800 field.

As one sub-embodiment of this embodiment, the same RRC field is one PagingRecord-r18 field.

As one sub-embodiment of this embodiment, the same RRC field has a name that comprises the PagingRecord, and the same RRC field has a name that does not comprises a List.

As one embodiment, the first message comprises one PagingRecordList, and the one PagingRecordList comprises the first field; the first message comprises one PagingRecordList-v1800, and the one PagingRecordList-v1800 comprises the second field; and an entry number of the second field in the one PagingRecordList-v1800 is the same as that of the first field in the one PagingRecordList.

As one sub-embodiment of this embodiment, the first field belongs to one entry in the one PagingRecordList.

As one sub-embodiment of this embodiment, the first field belongs to one PagingRecord in the one PagingRecordList.

As one sub-embodiment of this embodiment, the second field belongs to one entry in the one PagingRecordList-v1800.

As one sub-embodiment of this embodiment, the second field belongs to one PagingRecord-v1800 in the one PagingRecordList-v1800.

As one embodiment, the first message comprises one PagingRecordList, and the one PagingRecordList comprises the first field; the first message comprises one PagingRecordList-v1700, and the one PagingRecordList-v1700 comprises the second field; and the entry number of the second field in the one PagingRecordList-v1700 is the same as that of the first field in the one PagingRecordList.

As one sub-embodiment of this embodiment, the first field belongs to one entry in the one PagingRecordList.

As one sub-embodiment of this embodiment, the first field belongs to one PagingRecord in the one PagingRecordList.

As one sub-embodiment of this embodiment, the second field belongs to one entry in the one PagingRecordList-v1700.

As one sub-embodiment of this embodiment, the second field belongs to one PagingRecord-v1700 in the one PagingRecordList-v1700.

### Embodiment 9A

Embodiment 9A illustrates a schematic diagram of an air interface resource of a first Preamble depending on a first information block according to one embodiment of the present application, as shown in FIG. 9A.

In Embodiment 9A, the first information block indicates at least one of a Preamble sequence used by the first Preamble, or an uplink carrier occupied by the first Preamble, or an RS resource associated with the first Preamble, or a PRACH mask of the first Preamble.

As one embodiment, the first information block comprises a first target field, and the first target field indicates the Preamble sequence used by the first Preamble.

As one sub-embodiment of this embodiment, the first target field indicates an index of the first Preamble.

As one sub-embodiment of this embodiment, the first target field indicates the index of the Preamble sequence used by the first Preamble.

As one sub-embodiment of this embodiment, a value of the first target field is one character string.

As one sub-embodiment of this embodiment, the value of the first target field is one bit string.

As one sub-embodiment of this embodiment, the first target field comprises at least one bit.

As one sub-embodiment of this embodiment, a length of the first target field is 6 bits.

As one sub-embodiment of this embodiment, the length of the first target field is 5 bits.

As one sub-embodiment of this embodiment, the first target field is one Random Access Preamble index field.

As one sub-embodiment of this embodiment, the first target field is one ra-PreambleIndex field.

As one sub-embodiment of this embodiment, an interpretation of the first target field refers to the Random Access Preamble index field in DCI Format 1_0 in Section 7.3.1.2.1 of 3GPP TS38.212.

As one embodiment, the first information block comprises a second target field, and the second target field indicates the uplink carrier occupied by the first Preamble.

As one sub-embodiment of this embodiment, candidates of the second target field comprise a UL and an SUL (Supplementary Uplink).

As one sub-embodiment of this embodiment, candidates of the second target field comprise an NUL (Normal Uplink) and the SUL.

As one sub-embodiment of this embodiment, candidates of the uplink carrier indicated by the second target field comprise the NUL and the SUL.

As one sub-embodiment of this embodiment, the second target field indicates one of the NUL and the SUL.

As one sub-embodiment of this embodiment, the length of the second target field is 1 bit.

As one sub-embodiment of this embodiment, the value of the second target field is one character string.

As one sub-embodiment of this embodiment, the value of the second target field is one bit string.

As one sub-embodiment of this embodiment, the value of the second target field is one Boolean value.

As one sub-embodiment of this embodiment, the second target field is one UL/SUL indicator field.

As one sub-embodiment of this embodiment, the interpretation of the second target field refers to a UL/SUL indicator field in DCI Format 1_0 in Section 7.3.1.2.1 of 3GPP TS38.212.

As one embodiment, the uplink carrier occupied by the first Preamble is default.

As one sub-embodiment of this embodiment, the first information block does not comprise a field for indicating the uplink carrier occupied by the first Preamble.

As one sub-embodiment of this embodiment, the uplink carrier occupied by the first Preamble is the NUL.

As one sub-embodiment of this embodiment, the uplink carrier occupied by the first Preamble is the SUL.

As one embodiment, the first information block comprises a third target field, and the third target field indicates the RS resource associated with the first Preamble.

As one sub-embodiment of this embodiment, the value of the third target field is one character string.

As one sub-embodiment of this embodiment, the value of the third target field is one bit string.

As one sub-embodiment of this embodiment, the third target field comprises at least one bit.

As one sub-embodiment of this embodiment, the length of the third target field is 6 bits.

As one sub-embodiment of this embodiment, the length of the third target field is 5 bits.

As one sub-embodiment of this embodiment, the third target field is one ssb field, and the third target field indicates an SSB-Index.

As one sub-embodiment of this embodiment, the third target field is one csi-RS field, and the third target field indicates a CSI-RS-Index.

As one sub-embodiment of this embodiment, the third target field is one SS/PBCH index field.

As one sub-embodiment of this embodiment, the interpretation of the third target field refers to the SS/PBCH field in DCI Format 1_0 in Section 7.3.1.2.1 of 3GPP TS38.212.

As one embodiment, the first information block comprises a fourth target field, and the fourth target field indicates the PRACH mask of the first Preamble.

As one sub-embodiment of this embodiment, the fourth target field comprises the index of the PRACH mask used by the first Preamble.

As one sub-embodiment of this embodiment, the fourth target field comprises one index in one table.

As one sub-embodiment of this embodiment, the fourth target field comprises one index in Table 7.4.1 in 3GPP TS38.321.

As one sub-embodiment of this embodiment, the value of the fourth target field is one character string.

As one sub-embodiment of this embodiment, the value of the fourth target field is one bit string.

As one sub-embodiment of this embodiment, the fourth target field comprises at least one bit.

As one sub-embodiment of this embodiment, the length of the fourth target field is 5 bits.

As one sub-embodiment of this embodiment, the length of the fourth target field is 4 bits.

As one sub-embodiment of this embodiment, the fourth target field is one PRACH Mask index field.

As one sub-embodiment of this embodiment, the interpretation of the fourth target field refers to the PRACH Mask index field in DCI Format 1_0 in Section 7.3.1.2.1 of 3GPP TS38.212.

As one embodiment, the first information block comprises at least one of the first target field, or the second target field, or the third target field, or the fourth target field.

### Embodiment 9B

Embodiment 9B illustrates a schematic diagram of processing of a first signal depending on a target information block according to one embodiment of the present application, as shown in FIG. 9B.

In Embodiment 9B, the meaning of a phrase "a behavior of processing the first signal depends on a target information block" comprises: the target information block indicates an air interface resource used for the first signal; and the air interface resource comprises at least one of a code domain resource, or a time domain resource, or a frequency domain resource.

As one embodiment, the target information block indicates the air interface resource dedicated to a first node, and the air interface resource dedicated to the first node is used for processing the first signal.

As one embodiment, the air interface resource dedicated to the first node indicated by the target information block is one shot.

As one embodiment, the air interface resource dedicated to the first node indicated by the target information block is not one shot.

As one embodiment, the target information block indicates configuration information of the air interface resource used for the first signal.

As one embodiment, the target information block explicitly indicates the air interface resource used for the first signal.

As one embodiment, the target information block implicitly indicates the air interface resource used for the first signal.

As one embodiment, the target information block indicates an index of the air interface resource used for the first signal.

As one embodiment, the target information block indicates the index of the air interface resource used for the first signal.

As one embodiment, the target information block indicates the air interface resource used for the first signal among at least one air interface resource.

As one embodiment, the air interface resource of the first signal comprises a CORESET (Control Resource Set) used for the first signal.

As one embodiment, the air interface resource of the first signal comprises a TCI (Transmission Configuration Indicator) used for the first signal.

As one embodiment, the air interface resource of the first signal comprises a QCL relationship used for the first signal.

As one embodiment, the air interface resource of the first signal comprises power used for the first signal.

As one embodiment, the air interface resource of the first signal comprises a search space used for the first signal.

As one embodiment, the air interface resource comprises at least one of the code domain resource, or the time domain resource, or the frequency domain resource, or a power resource, or a spatial domain resource.

As one embodiment, the code domain resource of the first signal comprises one sequence used by the first signal.

As one embodiment, the code domain resource of the first signal comprises one PRACH sequence used by the first signal.

As one embodiment, the code domain resource of the first signal comprises one ZC sequence used by the first signal.

As one embodiment, the code domain resource of the first signal comprises one NZC sequence used by the first signal.

As one embodiment, the code domain resource of the first signal comprises one root sequence used by the first signal.

As one embodiment, the code domain resource of the first signal comprises one bit string used by the first signal.

As one embodiment, the time domain resource of the first signal comprises a time slot occupied by the first signal.

As one embodiment, the time domain resource of the first signal comprises a subframe occupied by the first signal.

As one embodiment, the time domain resource of the first signal comprises a symbol occupied by the first signal.

As one embodiment, the time domain resource of the first signal comprises a system frame occupied by the first signal.

As one embodiment, the frequency domain resource of the first signal comprises a BWP (Bandwidth Part) occupied by the first signal.

As one embodiment, the frequency domain resource of the first signal comprises a carrier occupied by the first signal.

As one embodiment, the frequency domain resource of the first signal comprises a frequency occupied by the first signal.

As one embodiment, the frequency domain resource of the first signal comprises a subcarrier spacing used by the first signal.

As one embodiment, the spatial domain resource of the first signal comprises the QCL (Quasi co-location) relationship of the first signal.

As one embodiment, the spatial domain resource of the first signal comprises a TRP (Transmitter Receiver Point) used for the first signal.

As one embodiment, the spatial domain resource of the first signal comprises a beam used for the first signal.

As one embodiment, the spatial domain resource of the first signal comprises an SSB used for the first signal.

As one embodiment, the SSB refers to a Synchronization Signal Block.

As one embodiment, the SSB refers to an SS (Synchronization Signal)/PBCH (Physical broadcast channel) block.

As one embodiment, the air interface resource comprises a physical layer resource.

As one embodiment, the air interface resource refers to the physical layer resource.

As one embodiment, the air interface resource is a wireless resource of a Uu port.

As one embodiment, the air interface resource comprises a resource occupied by one physical layer signal.

As one embodiment, the air interface resource comprises a resource occupied by one physical layer channel.

As one embodiment, the air interface resource comprises a PUSCH resource, and the first signal is one PUSCH transmission.

As one embodiment, the air interface resource comprises a PUCCH resource, and the first signal is one PUCCH signal.

As one embodiment, the air interface resource comprises a PDCCH resource, and the first signal is one PDCCH signal.

As one embodiment, the air interface resource comprises a PRACH resource, and the first signal is one PRACH signal.

As one embodiment, the air interface resource comprises the SSB, and the first signal is one SSB.

As one embodiment, the air interface resource comprises a CSI-RS (Channel State Information Reference Signal) resource, and the first signal is one CSI-RS.

As one embodiment, the air interface resource comprises an SRS (Sounding Reference Signal) resource, and the first signal is one SRS.

### Embodiment 10A

Embodiment 10A illustrates a schematic diagram of a first RNTI and a first signaling according to one embodiment of the present application, as shown in FIG. 10A.

In Embodiment 10A, the first RNTI is one C-RNTI, and the first signaling comprises one Absolute Timing Advance MAC CE.

As one embodiment, the first RNTI is the C-RNTI of a first node.

As one embodiment, the first RNTI is the C-RNTI of the first node in a first cell.

As one embodiment, the first RNTI is the C-RNTI in a cell in which the first node receives the last RRCRelease message before entering an RRC_INACTIVE state.

As one embodiment, the first RNTI is the C-RNTI of the first node in a cell in which a second message is received.

As one embodiment, the first RNTI is the C-RNTI stored in a UE Inactive AS context of the first node.

As one embodiment, the first signaling comprises one Absolute Timing Advance MAC CE.

As one embodiment, the first signaling comprises one MAC subPDU, the one MAC subPDU comprises one Absolute Timing Advance MAC CE and one MAC subheader, the one MAC subheader comprises one eLCID (extended Logical Channel ID) field, and the eLCID field is set to 252.

### Embodiment 10B

Embodiment 10B illustrates a schematic diagram of a first signal being one Preamble according to one embodiment of the present application, as shown in FIG. 10B.

In Embodiment 10B, the first signal is one Preamble.

As one embodiment, a target information block indicates at least one of a Preamble sequence used by the first signal, or an uplink carrier occupied by the first signal, or an RS resource associated with the first signal, or a PRACH mask of the first signal.

As one embodiment, the target information block indicates the Preamble sequence used by the first signal.

As one sub-embodiment of this embodiment, at least one bit in the target information block indicates an index of the Preamble sequence used by the first signal.

As one sub-embodiment of this embodiment, the target information block comprises a first target field, and the first target field indicates the Preamble sequence used by the first signal.

As one sub-embodiment of this embodiment, a value of the first target field is one character string.

As one sub-embodiment of this embodiment, the value of the first target field is one bit string.

As one sub-embodiment of this embodiment, the first target field comprises at least one bit.

As one sub-embodiment of this embodiment, a length of the first target field is 6 bits.

As one sub-embodiment of this embodiment, the length of the first target field is 5 bits.

As one sub-embodiment of this embodiment, the first target field is one Random Access Preamble index field.

As one sub-embodiment of this embodiment, the first target field is one ra-PreambleIndex field.

As one sub-embodiment of this embodiment, an interpretation of the first target field refers to the Random Access Preamble index field in DCI Format 1_0 in Section 7.3.1.2.1 of 3GPP TS38.212.

As one embodiment, the target information block indicates the uplink carrier occupied by the first signal.

As one sub-embodiment of this embodiment, at least one bit in the target information block indicates the uplink carrier occupied by the first signal.

As one sub-embodiment of this embodiment, the target information block comprises a second target field, and the second target field indicates the uplink carrier occupied by the first signal.

As one sub-embodiment of this embodiment, candidates of the second target field comprise a UL and an SUL (Supplementary Uplink).

As one sub-embodiment of this embodiment, candidates of the second target field comprise an NUL (Normal Uplink) and the SUL.

As one sub-embodiment of this embodiment, candidates of the uplink carrier indicated by the second target field comprise the NUL and the SUL.

As one sub-embodiment of this embodiment, the second target field indicates one of the NUL and the SUL.

As one sub-embodiment of this embodiment, the length of the second target field is 1 bit.

As one sub-embodiment of this embodiment, the value of the second target field is one character string.

As one sub-embodiment of this embodiment, the value of the second target field is one bit string.

As one sub-embodiment of this embodiment, the value of the second target field is one Boolean value.

As one sub-embodiment of this embodiment, the second target field is one UL/SUL indicator field.

As one sub-embodiment of this embodiment, the interpretation of the second target field refers to the UL/SUL indicator field in DCI Format 1_0 in Section 7.3.1.2.1 of 3GPP TS38.212.

As one embodiment, the uplink carrier occupied by a first Preamble is default.

As one sub-embodiment of this embodiment, the target information block does not comprise a field for indicating the uplink carrier occupied by the first Preamble.

As one sub-embodiment of this embodiment, the uplink carrier occupied by the first Preamble is the NUL.

As one sub-embodiment of this embodiment, the uplink carrier occupied by the first Preamble is the SUL.

As one embodiment, the target information block indicates the RS (Reference Signal) resource associated with the first signal.

As one embodiment, at least one bit in the target information block indicates the RS resource associated with the first signal.

As one embodiment, the target information block comprises a third target field, and the third target field indicates the RS resource associated with the first Preamble.

As one sub-embodiment of this embodiment, the value of the third target field is one character string.

As one sub-embodiment of this embodiment, the value of the third target field is one bit string.

As one sub-embodiment of this embodiment, the third target field comprises at least one bit.

As one sub-embodiment of this embodiment, the length of the third target field is 6 bits.

As one sub-embodiment of this embodiment, the length of the third target field is 5 bits.

As one sub-embodiment of this embodiment, the third target field is one ssb field, and the third target field indicates an SSB-Index.

As one sub-embodiment of this embodiment, the third target field is one csi-RS field, and the third target field indicates a CSI-RS-Index.

As one sub-embodiment of this embodiment, the third target field is one SS/PBCH index field.

As one sub-embodiment of this embodiment, the interpretation of the third target field refers to the SS/PBCH field in DCI Format 1_0 in Section 7.3.1.2.1 of 3GPP TS38.212.

As one embodiment, the target information block indicates the PRACH mask of the first signal.

As one embodiment, at least one bit in the target information block indicates the PRACH mask of the first signal.

As one embodiment, the target information block comprises a fourth target field, and the fourth target field indicates the PRACH mask of the first Preamble.

As one sub-embodiment of this embodiment, the fourth target field comprises the index of the PRACH mask used by the first Preamble.

As one sub-embodiment of this embodiment, the fourth target field comprises one index in one table.

As one sub-embodiment of this embodiment, the fourth target field comprises one index in Table 7.4.1 in 3GPP TS38.321.

As one sub-embodiment of this embodiment, the value of the fourth target field is one character string.

As one sub-embodiment of this embodiment, the value of the fourth target field is one bit string.

As one sub-embodiment of this embodiment, the fourth target field comprises at least one bit.

As one sub-embodiment of this embodiment, the length of the fourth target field is 5 bits.

As one sub-embodiment of this embodiment, the length of the fourth target field is 4 bits.

As one sub-embodiment of this embodiment, the fourth target field is one PRACH Mask index field.

As one sub-embodiment of this embodiment, the interpretation of the fourth target field refers to the PRACH Mask index field in DCI Format 1_0 in Section 7.3.1.2.1 of 3GPP TS38.212.

As one embodiment, the target information block comprises at least one of the first target field, or the second target field, or the third target field, or the fourth target field.

### Embodiment 11A

Embodiment 11A illustrates a flowchart of transmission of a first message, a first Preamble, and a PDCCH identified by a first RNTI according to another embodiment of the present application, as shown in FIG. 11A. In FIG. 11A, each block represents one step. It is particularly emphasized that the order of the blocks in the figure does not represent the temporal relationship between the steps represented.

In Embodiment 11A, in step 1101, a first node in the present application receives the first message, the first message comprising a first identifier, and the first identifier indicating a first cell; in step 1102, after the first message is received, sends the first Preamble in a first random access process; and in step 1103, in response to a behavior of sending the first Preamble, monitors, in a first time window, the PDCCH identified by the first RNTI, wherein the first message is one MAC CE; the first message comprises a first information block; an air interface resource of the first Preamble depends on the first information block; and the air interface resource comprises at least one of a code domain resource, or a time domain resource, or a frequency domain resource.

As one embodiment, the first message is received on one serving cell of the first node.

As one embodiment, the first message is received on a PCell of the first node.

As one embodiment, the first message is received in an RRC_CONNECTED state.

As one embodiment, the first message is used for an L1/L2 triggered mobility.

As one embodiment, the first message is used for mobility.

As one embodiment, the first message is used for handover.

As one embodiment, the first message is a UE-specific signaling.

As one embodiment, the first message is used for commanding the first node to move the PCell to the first cell.

As one embodiment, the above movement refers to handover.

As one embodiment, the above movement refers to switch.

As one embodiment, the above movement refers to change.

As one embodiment, the first information block is one MAC field.

As one embodiment, the first information block is a plurality of MAC fields.

As one embodiment, the first cell is one candidate cell for the L1/L2 triggered mobility.

As one embodiment, the first cell is configured with at least one CellGroupConfig IE.

As one embodiment, the first cell is configured with at least one ServingCellConfig IE.

As one embodiment, the first cell is configured with the first identifier.

As one embodiment, the first identifier is an index of the first cell.

As one embodiment, the first identifier is the index of a candidate configuration of the first cell.

As one embodiment, the first identifier is the index of the candidate configuration of the first cell in at least one candidate configuration.

As one embodiment, the first identifier is the index of the first cell in at least one candidate cell.

As one embodiment, before the first message, at least one RRCReconfiguration message is received, and the at least one RRCReconfiguration message comprises the index and configuration information of each candidate cell among the at least one candidate cell.

As one embodiment, at least one RRCReconfiguration message comprises a CellGroupConfig IE configured to each candidate cell.

As one embodiment, at least one RRCReconfiguration message comprises a ServingCellConfig IE configured to each candidate cell.

As one embodiment, the air interface resource of the first Preamble belongs to the first cell.

As one embodiment, the first random access process is executed on the first cell.

### Embodiment 11B

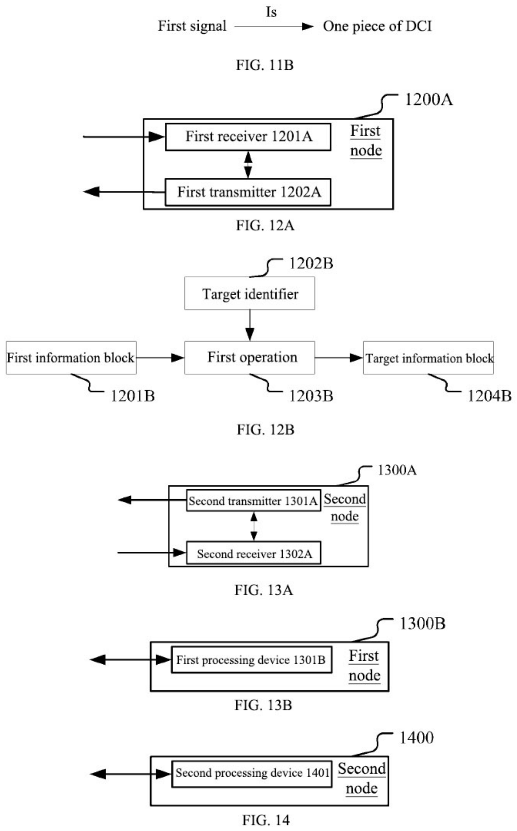

Embodiment 11B illustrates a schematic diagram of a first signal being one piece of DCI according to one embodiment of the present application, as shown in FIG. 11B.

In Embodiment 11B, the first signal is one piece of DCI.

As one embodiment, a first signaling is used for scheduling a PUSCH.

As one embodiment, the first signaling is used for scheduling a PDSCH (Physical Downlink Shared Channel).

As one embodiment, a format of the first signal is DCI format 0_0.

As one embodiment, the format of the first signal is DCI format 0_1.

As one embodiment, the format of the first signal is DCI format 0_2.

As one embodiment, the format of the first signal is DCI format 1_0.

As one embodiment, the format of the first signal is DCI format 1_1.

As one embodiment, the format of the first signal is DCI format 1_2.

As one embodiment, the first signaling is identified by a second identifier, and the second identifier is a C-RNTI of a first node.

As one embodiment, the first signaling is identified by one C-RNTI of the first node.

As one embodiment, the first signaling is identified by the C-RNTI of the first node in a first cell.

As one embodiment, a target information block indicates an air interface resource used for the first signal.

As one embodiment, the target information block indicates a search space used for receiving the first signal.

As one embodiment, the target information block indicates a CORESET used for receiving the first signal.

As one embodiment, the target information block indicates a TCI used for receiving the first signal.

As one embodiment, the target information block indicates a PDCCH used for receiving the first signal.

As one embodiment, the target information block indicates configuration information of the PDCCH used for receiving the first signal.

As one embodiment, the target information block indicates a PDCCH parameter dedicated to the first node used for receiving the first signal.

As one embodiment, the target information block comprises one index.

As one embodiment, the target information block comprises one TCI-StateId.

As one embodiment, the target information block comprises one ControlResourceSetld.

As one embodiment, the target information block comprises one ControlResourceSetZero.

As one embodiment, the target information block comprises one BWP-Id.

As one embodiment, the target information block comprises one SearchSpaceId.

### Embodiment 12A

Embodiment 12A illustrates a structural block diagram of a processing apparatus used in a first node according to one embodiment of the present application, as shown in FIG. 12A. In FIG. 12A, a processing apparatus 1200A in the first node comprises a first receiver 1201A and a first transmitter 1202A.

The first receiver 1201A receives a first message, the first message comprising a first identifier, and the first identifier indicating the first node;
after the first message is received, the first transmitter 1202A sends a first Preamble in a first random access process; and
in response to a behavior of sending the first Preamble, the first receiver 1201A monitors, in a first time window, a PDCCH identified by a first RNTI;
in Embodiment 12A, the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

As one embodiment, an interpretation of the first information block depends on a second identifier, the second identifier is used for the first node, and the first identifier is different from the second identifier.

As one embodiment, before the first message is received, the first receiver 1201A receives a second message, the second message being used for determining to enter an RRC_INACTIVE state, wherein the second message comprises the first identifier; the first message indicates that the first node performs data transmission in the RRC_INACTIVE state; and the first message is received in the RRC_INACTIVE state.

As one embodiment, the first information block indicates at least one of a Preamble sequence used by the first Preamble, or an uplink carrier occupied by the first Preamble, or an RS resource associated with the first Preamble, or a PRACH mask of the first Preamble.

As one embodiment, the first receiver 1201A receives a third message, the third message being used for determining at least one PRACH configuration, wherein the first information block indicates a first PRACH configuration in the at least one PRACH configuration; and the first PRACH configuration is used for determining the air interface resource of the first Preamble.

As one embodiment, the first receiver 1201A receives first DCI, the first DCI being identified by the first RNTI; and in response to the first DCI being received, the first random access process is considered to be successfully completed, wherein the first RNTI is one C-RNTI.

As one embodiment, the first receiver 1201A receives the first DCI and a first signaling, the first DCI being identified by the first RNTI, and the first DCI being used for scheduling the first signaling; and in response to the first signaling being received, the first random access process is considered to be successfully completed, wherein the first signaling comprises at least a timing advance.

As one embodiment, the first RNTI is one C-RNTI, and the first signaling comprises one Absolute Timing Advance MAC CE.

As one embodiment, the first receiver 1201A comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver 1201A comprises the antenna 452, the receiving device 454, the multi-antenna receiving processor 458, and the receiving processor 456 in FIG. 4 of the present application.

As one embodiment, the first receiver 1201A comprises the antenna 452, the receiving device 454, and the receiving processor 456 in FIG. 4 of the present application.

As one embodiment, the first transmitter 1202A comprises the antenna 452, a transmitting device 454, a multi-antenna transmitting processor 457, a transmitting processor 468, the controller/processor 459, the memory 460, and the data source 467 in FIG. 4 of the present application.

As one embodiment, the first transmitter 1202A comprises the antenna 452, the transmitting device 454, the multi-antenna transmitting processor 457, and the transmitting processor 468 in FIG. 4 of the present application.

As one embodiment, the first transmitter 1202A comprises the antenna 452, the transmitting device 454, and the transmitting processor 468 in FIG. 4 of the present application.

### Embodiment 12B

Embodiment 12B illustrates a schematic diagram of at least part of bits in a first information block and a target identifier subjected to a first operation to obtain a target information block according to one embodiment of the present application, as shown in FIG. 12B. Block 1201B comprises the first information block, block 1202B comprises the target identifier, block 1203B comprises the first operation, and block 1204B comprises the target information block.

In Embodiment 12B, at least part of bits in the first information block and the target identifier are subjected to the first operation to obtain the target information block.

As one embodiment, the first processing device executes the first operation.

As one embodiment, a first node executes the first operation.

As one embodiment, input of the first operation comprises at least part of bits in the first information block.

As one embodiment, the input of the first operation comprises the target identifier.

As one embodiment, the output of the first operation comprises the target information block.

As one embodiment, the first operation comprises an inverse operation of a second operation.

As one embodiment, the first operation comprises: linear operation.

As one embodiment, the first operation comprises: nonlinear operation.

As one embodiment, the first operation comprises: logical operation.

As one embodiment, the first operation comprises: Boolean operation.

As one embodiment, the first operation comprises: bit operation.

As one embodiment, the first operation comprises: XOR.

As one embodiment, the first operation comprises: AND-OR.

As one embodiment, the first operation comprises: XNOR.

As one embodiment, the first operation comprises: AND.

As one embodiment, the first operation comprises: OR.

As one embodiment, the first operation comprises: NOT.

As one embodiment, the first operation comprises: AND-NOT.

As one embodiment, the first operation comprises: CRC.

As one embodiment, the first operation is: linear operation.

As one embodiment, the first operation is: nonlinear operation.

As one embodiment, the first operation is: logical operation.

As one embodiment, the first operation is: Boolean operation.

As one embodiment, the first operation is: bit operation.

As one embodiment, the first operation is: XOR.

As one embodiment, the first operation is: AND-OR.

As one embodiment, the first operation is: XNOR.

As one embodiment, the first operation is: AND.

As one embodiment, the first operation is: OR.

As one embodiment, the first operation is: NOT.

As one embodiment, the first operation is: AND-NOT.

As one embodiment, the first operation is: CRC.

As one embodiment, it is assumed that the first information block is 10111000111111111, the target identifier is 00101010110110010, and the first information block and the target identifier are subjected to the first operation to obtain the target information block 10010000010011010, wherein a second identifier is 001010101101100101001110, the target identifier is the first 14 bits in the second identifier, and the first operation is XOR.

As one embodiment, it is assumed that the first information block is 10111001111111110, the target identifier is 0010100110110010, and the first 16 bits in the first information block and the target identifier are subjected to the first operation to obtain the target information block 10010000010011010, wherein the second identifier is 0010100110110010, the target identifier is the second identifier, and the first operation is XOR.

As one embodiment, at least part of bits in the target information block and the target identifier are subjected to the second operation to obtain the first information block; and the second operation is executed by a second node.

As one embodiment, at least part of bits in the target information block are subjected to the second operation to obtain the first information block; and the second operation is executed by the second node.

### Embodiment 13A

Embodiment 13A illustrates a structural block diagram of a processing apparatus in a second node according to one embodiment of the present application, as shown in FIG. 13A. In FIG. 13A, a processing apparatus 1300A in the second node comprises a second transmitter 1301A and a second receiver 1302A.

The second transmitter 1301A sends a first message, the first message comprising a first identifier, and the first identifier indicating a first node;
the second receiver 1302A, after the first message is sent, receives a first Preamble in a first random access process;
in response to a behavior of receiving the first Preamble, the second transmitter 1301A sends a PDCCH identified by a first RNTI;
in Embodiment 13A, a sender of the first Preamble monitors, in a first time window, the PDCCH identified by the first RNTI; the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

As one embodiment, an interpretation of the first information block depends on a second identifier, the second identifier is used for the first node, and the first identifier is different from the second identifier.

As one embodiment, before the first message is sent, the second transmitter 1301A sends a second message, the second message being used for determining to enter an RRC_INACTIVE state, wherein the second message comprises the first identifier; the first message indicates that the sender of the first Preamble performs data transmission in the RRC_INACTIVE state; and the first message is received in the RRC_INACTIVE state.

As one embodiment, the first information block indicates at least one of a Preamble sequence used by the first Preamble, or an uplink carrier occupied by the first Preamble, or an RS resource associated with the first Preamble, or a PRACH mask of the first Preamble.

As one embodiment, the second transmitter 1301A sends a third message, the third message being used for determining at least one PRACH configuration, wherein the first information block indicates a first PRACH configuration in the at least one PRACH configuration; and the first PRACH configuration is used for determining the air interface resource of the first Preamble.

As one embodiment, the second transmitter 1301A sends first DCI, the first DCI being identified by the first RNTI, wherein in response to the first DCI being received, the sender of the first Preamble considers that the first random access process is successfully completed; and the first RNTI is one C-RNTI.

As one embodiment, the second transmitter 1301A sends the first DCI and a first signaling, the first DCI being identified by the first RNTI, and the first DCI being used for scheduling the first signaling, wherein in response to the first signaling being received, the sender of the first Preamble considers that the first random access process is successfully completed; and the first signaling comprises at least a timing advance.

As one embodiment, the first RNTI is one C-RNTI, and the first signaling comprises one Absolute Timing Advance MAC CE.

As one embodiment, the second transmitter 1301A comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1301A comprises the antenna 420, the transmitting device 418, the multi-antenna transmitting processor 471, and the transmitting processor 416 in FIG. 4 of the present application.

As one embodiment, the second transmitter 1301A comprises the antenna 420, the transmitting device 418, and the transmitting processor 416 in FIG. 4 of the present application.

As one embodiment, the second receiver 1302A comprises the antenna 420, a receiving device 418, a multi-antenna receiving processor 472, a receiving processor 470, the controller/processor 475, and the memory 476 in FIG. 4 of the present application.

As one embodiment, the second receiver 1302A comprises the antenna 420, the receiving device 418, the multi-antenna receiving processor 472, and the receiving processor 470 in FIG. 4 of the present application.

As one embodiment, the second receiver 1302A comprises the antenna 420, the receiving device 418, and the receiving processor 470 in FIG. 4 of the present application.

### Embodiment 13B

Embodiment 13B illustrates a structural block diagram of a processing apparatus used in a first node according to one embodiment of the present application, as shown in FIG. 13B. In FIG. 13B, a processing apparatus 1300B in the first node comprises a first processing device 1301B.

The first processing device 1301B receives a first message, the first message being one RRC message, the first message being not transmitted through a dedicated logical channel, the first message comprising a first identifier, and the first identifier indicating the first node; and after the first message is received, processes a first signal.

In Embodiment 13B, a behavior of processing the first signal depends on a target information block, and at least the former of a first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, at least part of the first information block and the target identifier are used for determining the target information block, and the second identifier is used for generating the target identifier.

As one embodiment, the first information block comprises at least one bit; and the second identifier is one bit string.

As one embodiment, before the first message is received, the first processing device 1301B receives at least the former of a first sub-message and a second sub-message, wherein the first sub-message comprises the first identifier; and the second sub-message comprises the second identifier.

As one embodiment, the first sub-message is used for determining to enter an RRC_INACTIVE state; a logical channel used for carrying the first message is a PCCH; and the first message indicates that the first node performs data transmission in the RRC_INACTIVE state.

As one embodiment, the meaning of the phrase "a behavior of processing the first signal depends on a target information block" comprises: the target information block indicates an air interface resource used for the first signal; and the air interface resource comprises at least one of a code domain resource, or a time domain resource, or a frequency domain resource.

As one embodiment, the first signal is one Preamble.

As one embodiment, the first signal is one piece of DCI.

As one embodiment, the first processing device 1301B comprises an antenna 452, a receiving device 454, a multi-antenna receiving processor 458, a receiving processor 456, a controller/processor 459, a memory 460, and a data source 467 in FIG. 4 of the present application.

As one embodiment, the first processing device 1301B comprises the antenna 452, the receiving device 454, the multi-antenna receiving processor 458, and the receiving processor 456 in FIG. 4 of the present application.

As one embodiment, the first processing device 1301B comprises the antenna 452, the receiving device 454, and the receiving processor 456 in FIG. 4 of the present application.

As one embodiment, the first processing device 1301B comprises the antenna 452, a transmitting device 454, a multi-antenna transmitting processor 457, a transmitting processor 468, the controller/processor 459, the memory 460, and the data source 467 in FIG. 4 of the present application.

As one embodiment, the first processing device 1301B comprises the antenna 452, the transmitting device 454, the multi-antenna transmitting processor 457, and the transmitting processor 468 in FIG. 4 of the present application.

As one embodiment, the first processing device 1301B comprises the antenna 452, the transmitting device 454, and the transmitting processor 468 in FIG. 4 of the present application.

### Embodiment 14

Embodiment 14 illustrates a structural block diagram of a processing apparatus used in a second node according to one embodiment of the present application, as shown in FIG. 14. In FIG. 14, a processing apparatus 1400 in the second node comprises a second processing device 1401.

The second processing device 1401 sends a first message, the first message being one RRC message, the first message being not transmitted through a dedicated logical channel, the first message comprising a first identifier, and the first identifier indicating a first node; and after the first message is sent, processes a first signal.

In Embodiment 14, a behavior of processing the first signal depends on a target information block, and at least the former of a first information block and a second identifier is used for determining the target information block; the target information block is dedicated to the first node; the second identifier is used for the first node, and the first identifier is different from the second identifier; the first message comprises only the former of the first information block and the target information block; and the processing comprises one of sending and receiving.

As one embodiment, at least part of the first information block and the target identifier are used for determining the target information block, and the second identifier is used for generating the target identifier.

As one embodiment, the first information block comprises at least one bit; and the second identifier is one bit string.

As one embodiment, before the first message is sent, the second processing device 1401 sends at least the former of a first sub-message and a second sub-message, wherein the first sub-message comprises the first identifier; and the second sub-message comprises the second identifier.

As one embodiment, the first sub-message is used for determining to enter an RRC_INACTIVE state; a logical channel used for carrying the first message is a PCCH; and the first message indicates that the first node performs data transmission in the RRC_INACTIVE state.

As one embodiment, the meaning of a phrase "a behavior of processing the first signal depends on a target information block" comprises: the target information block indicates an air interface resource used for the first signal; and the air interface resource comprises at least one of a code domain resource, or a time domain resource, or a frequency domain resource.

As one embodiment, the first signal is one Preamble.

As one embodiment, the first signal is one piece of DCI.

As one embodiment, the second processing device 1401 comprises an antenna 420, a transmitting device 418, a multi-antenna transmitting processor 471, a transmitting processor 416, a controller/processor 475, and a memory 476 in FIG. 4 of the present application.

As one embodiment, the second processing device 1401 comprises the antenna 420, the transmitting device 418, the multi-antenna transmitting processor 471, and the transmitting processor 416 in FIG. 4 of the present application.

As one embodiment, the second processing device 1401 comprises the antenna 420, the transmitting device 418, and the transmitting processor 416 in FIG. 4 of the present application.

As one embodiment, the second processing device 1401 comprises the antenna 420, a receiving device 418, a multi-antenna receiving processor 472, a receiving processor 470, the controller/processor 475, and the memory 476 in FIG. 4 of the present application.

As one embodiment, the second processing device 1401 comprises the antenna 420, the receiving device 418, the multi-antenna receiving processor 472, and the receiving processor 470 in FIG. 4 of the present application.

As one embodiment, the second processing device 1401 comprises the antenna 420, the receiving device 418, and the receiving processor 470 in FIG. 4 of the present application.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes but is not limited to macro cellular base stations, micro cellular base stations, Femtocells, relay base stations, gNBs (NR nodes B), TRPs (Transmitter Receiver Points), and other wireless communication devices.

The above is only a preferred embodiment of the present application and is not used for limiting the scope of protection of the present application. Any modifications, equivalent substitutions, improvements and the like made within the spirit and principles of the present invention shall be comprised within the scope of protection of the present invention.

## Claims

1. A first node for wireless communication, comprising:
a first receiver for receiving a first message, the first message comprising a first identifier, and the first identifier indicating the first node; and
a first transmitter for, after the first message is received, sending a first Preamble in a first random access process;
in response to a behavior of sending the first Preamble, the first receiver monitoring, in a first time window, a PDCCH identified by a first RNTI;
wherein the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

2. The first node according to claim 1, wherein an interpretation of the first information block depends on a second identifier, the second identifier is used for the first node, and the first identifier is different from the second identifier.

3. The first node according to claim 1 or 2, comprising:
a first receiver for, before the first message is received, receiving a second message, the second message being used for determining to enter an RRC_INACTIVE state;
wherein the second message comprises the first identifier; the first message indicates that the first node performs data transmission in the RRC_INACTIVE state; and the first message is received in the RRC_INACTIVE state.

4. The first node according to any one of claims 1 to 3, wherein the first information block indicates at least one of a Preamble sequence used by the first Preamble, or an uplink carrier occupied by the first Preamble, or an RS resource associated with the first Preamble, or a PRACH mask of the first Preamble.

5. The first node according to any one of claims 1 to 3, comprising:
a first receiver for receiving a third message, the third message being used for determining at least one PRACH configuration;
wherein the first information block indicates a first PRACH configuration in the at least one PRACH configuration; and the first PRACH configuration is used for determining the air interface resource of the first Preamble.

6. The first node according to any one of claims 1 to 5, comprising:
the first receiver for receiving first DCI, the first DCI being identified by the first RNTI; and in response to the first DCI being received, the first random access process is considered to be successfully completed;
wherein the first RNTI is one C-RNTI.

7. The first node according to any one of claims 1 to 5, comprising:
the first receiver for receiving first DCI and a first signaling, the first DCI being identified by the first RNTI, and the first DCI being used for scheduling the first signaling; and in response to the first signaling being received, the first random access process is considered to be successfully completed;
wherein the first signaling comprises at least a timing advance.

8. The first node according to any one of claims 1 to 7, wherein the first RNTI is one C-RNTI, and the first signaling comprises one Absolute Timing Advance MAC CE.

9. A second node for wireless communication, comprising:
a second transmitter for sending a first message, the first message comprising a first identifier, and the first identifier indicating a first node; and
a second receiver for, after the first message is sent, receiving a first Preamble in a first random access process;
in response to a behavior of receiving the first Preamble, the second transmitter sending a PDCCH identified by a first RNTI;
wherein a sender of the first Preamble monitors, in a first time window, a PDCCH identified by the first RNTI; the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

10. A method used in a first node for wireless communication, comprising:
receiving a first message, the first message comprising a first identifier, and the first identifier indicating the first node;
after the first message is received, sending a first Preamble in a first random access process; and
in response to a behavior of sending the first Preamble, monitoring, in a first time window, a PDCCH identified by a first RNTI;
wherein the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.

11. A method used in a second node for wireless communication, comprising:
sending a first message, the first message comprising a first identifier, and the first identifier indicating a first node;
after the first message is sent, receiving a first Preamble in a first random access process; and
in response to a behavior of receiving the first Preamble, sending a PDCCH identified by a first RNTI;
wherein a sender of the first Preamble monitors, in a first time window, a PDCCH identified by the first RNTI; the first message is one RRC message, and a logical channel used for carrying the first message is a PCCH; the first message comprises a first information block; an air interface resource of the first Preamble depends on the first information block; and the air interface resource comprises at least one of a code domain resource, or a time domain resource, or a frequency domain resource.
